(19) Europäisches Patentamt / European Patent Office / Office européen des brevets

(11) **EP 2 984 656 B1**

(12) **FASCICULE DE BREVET EUROPEEN**

(45) Date de publication et mention de la délivrance du brevet:
**07.09.2016 Bulletin 2016/36**

(21) Numéro de dépôt: **14715315.9**

(22) Date de dépôt: **04.04.2014**

(51) Int Cl.:
***G21D 3/00*** (2006.01)

(86) Numéro de dépôt international:
**PCT/EP2014/056876**

(87) Numéro de publication internationale:
**WO 2014/166847 (16.10.2014 Gazette 2014/42)**

(54) **PROCEDES DE SIMULATION DE L'ECOULEMENT D'UN FLUIDE DANS UNE CUVE D'UN REACTEUR NUCLEAIRE ET DE CALCUL DE LA DEFORMATION MECANIQUE D'ASSEMBLAGES D'UN COEUR DE REACTEUR NUCLEAIRE, ET PRODUITS PROGRAMME D'ORDINATEUR ASSOCIES**

VERFAHREN ZUR SIMULATION DER STRÖMUNG EINES MEDIUMS IN EINEM KERNREAKTOR UND BERECHNUNG DER MECHANISCHEN VERFORMUNG VON ANORDNUNGEN EINES KERNREAKTORS SOWIE ENTSPRECHENDE COMPUTERPROGRAMMPRODUKTE

METHODS FOR SIMULATING THE FLOW OF A FLUID IN A VESSEL OF A NUCLEAR REACTOR AND FOR CALCULATING THE MECHANICAL DEFORMATION OF ASSEMBLIES OF A NUCLEAR REACTOR CORE, AND ASSOCIATED COMPUTER PROGRAM PRODUCTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **10.04.2013 FR 1353247**

(43) Date de publication de la demande:
**17.02.2016 Bulletin 2016/07**

(73) Titulaire: **AREVA NP**
**92400 Courbevoie (FR)**

(72) Inventeurs:
• **GOREAUD, Nicolas**
**F-69006 Lyon (FR)**
• **CHAZOT, Benjamin**
**F-69007 Lyon (FR)**
• **GALPIN, Jérémy**
**75017 Paris (FR)**
• **SALAÜN, Hubert**
**F-69009 Lyon (FR)**
• **MERY DE MONTIGNY, Elodie**
**F-69008 Lyon (FR)**

(74) Mandataire: **Lavoix**
**2, place d'Estienne d'Orves**
**75441 Paris Cedex 09 (FR)**

(56) Documents cités:
**KR-B1- 100 957 061     US-A- 5 638 413**

**Description**

La présente invention concerne un procédé de simulation de l'écoulement d'un fluide à l'intérieur d'une cuve d'un réacteur nucléaire.

L'invention concerne également un procédé de calcul d'une déformation mécanique d'au moins un assemblage de combustible nucléaire d'un coeur disposé à l'intérieur de la cuve du réacteur nucléaire.

L'invention concerne également un produit programme d'ordinateur pour la mise en oeuvre d'un tel procédé de simulation et un produit programme d'ordinateur pour la mise en oeuvre d'un tel procédé de calcul de la déformation mécanique.

L'invention s'applique aux réacteurs disposant d'un fluide de refroidissement, notamment aux réacteurs utilisant un gaz ou un liquide de refroidissement : eau légère, eau lourde, sel ou métal fondu...

Dans la suite, l'invention va être décrite pour une application aux réacteurs à eau légère, par exemple aux réacteurs à eau pressurisée, et le fluide circulant à l'intérieur de la cuve est alors de l'eau sous pression.

De manière classique, le réacteur nucléaire d'un réacteur à eau pressurisée comprend une cuve et un coeur disposé à l'intérieur de la cuve. Le coeur comporte des assemblages de combustible nucléaire, chaque assemblage s'étendant suivant une direction axiale, de préférence verticalement. Chaque assemblage comporte des crayons de combustible nucléaire et des grilles destinées à maintenir le positionnement des crayons et/ou à assurer le mélange du fluide de refroidissement, et est espacé d'un autre assemblage par un jeu suivant une direction transversale perpendiculaire à la direction axiale. Les crayons comportent chacun une gaine renfermant des pastilles de combustible nucléaire.

Le fluide, tel que de l'eau sous pression, circule à l'intérieur de la cuve, par exemple en remontant à l'intérieur de celle-ci au travers du coeur, pour y être réchauffé en assurant la réfrigération et la modération dans le coeur.

Un besoin récurrent est de simuler par ordinateur aussi précisément que possible l'écoulement du fluide à l'intérieur de la cuve, par exemple pour améliorer le calcul d'une déformation mécanique des assemblages du coeur lors du fonctionnement du réacteur, tout en ne nécessitant pas une puissance de calcul trop importante. Les déformations des assemblages sont en effet susceptibles de perturber le fonctionnement et la performance du réacteur : risque d'insertion incomplète des grappes de commande qui permettent de régler la réactivité du coeur du réacteur nucléaire ou d'accroissement inacceptable de leur temps de chute, risque de variation locale de la modération du coeur... En manutention, par exemple lors des opérations de déchargement et de rechargement du coeur pour maintenance, ces déformations augmentent les risques d'accrochage entre les assemblages de combustible. Une meilleure modélisation de ces déformations est donc recherchée afin d'y remédier ou a minima de définir des palliatifs.

Le document KR 100 957 066 B1 décrit un procédé de modélisation d'un coeur de réacteur nucléaire mettant en oeuvre un calcul de mécanique des fluides numérique, également appelé CFD (de l'anglais *Computational Fluid Dynamics*). Le modèle du coeur est basé sur un modèle poreux.

Le document KR 100 957 061 B1 décrit un procédé d'analyse de sécurité d'un réacteur nucléaire mettant en oeuvre des calculs hydrauliques à partir de coefficients de perte de charge.

Toutefois, la simulation de l'écoulement du fluide à l'intérieur de la cuve n'est pas optimale, la modélisation homogène du coeur ne permettant pas de déterminer les déformations des assemblages de combustible. Par ailleurs cette modélisation nécessite une puissance de calcul trop importante pour pouvoir être mise en oeuvre avec les moyens de calcul actuels.

Un but de l'invention est donc de proposer un procédé de simulation de l'écoulement du fluide à l'intérieur de la cuve du réacteur offrant une meilleure modélisation de l'écoulement, notamment pour améliorer le calcul de la déformation mécanique des assemblages du coeur, tout en ne nécessitant pas une puissance de calcul trop importante.

A cet effet, l'invention a pour objet un procédé de simulation de l'écoulement d'un fluide à l'intérieur d'une cuve d'un réacteur nucléaire, le réacteur nucléaire comprenant la cuve et un coeur disposé à l'intérieur de ladite cuve, le coeur comportant des assemblages de combustible nucléaire, chaque assemblage s'étendant suivant une direction axiale et comportant des crayons de combustible nucléaire et au moins une grille de maintien des crayons, chaque assemblage étant espacé d'un autre assemblage par un jeu entre les grilles suivant une direction transversale perpendiculaire à la direction axiale, le fluide étant propre à circuler à l'intérieur du coeur,

le procédé comprenant les étapes suivantes :

- i) déterminer des coefficients de pertes de charge dans le coeur,
- ii) calculer la pression du fluide et la ou les composantes de la vitesse du fluide dans le coeur et à l'aide de l'équation suivante :

$$\nabla P = -K \times V$$

où ∇ est l'opérateur nabla de dérivation spatiale du premier ordre,
P est la composante de la pression du fluide,
K est une matrice comportant les coefficients de pertes de charge déterminés lors de l'étape i), et
V est un vecteur comportant la ou les composantes de la vitesse du fluide,

procédé dans lequel, lors de l'étape i), un coefficient de perte de charge transverse dans les assemblages est déterminé en fonction d'un nombre de Reynolds transverse suivant la direction transversale, et un coefficient de perte de charge axiale dans le jeu est déterminé en fonction de la dimension du jeu suivant la direction transversale.

Suivant d'autres aspects avantageux de l'invention, le procédé de simulation comprend une ou plusieurs des caractéristiques suivantes, prises isolément ou suivant toutes les combinaisons techniquement possibles :

- lors de l'étape i), le coefficient de perte de charge transverse est déterminé, pour une valeur du nombre de Reynolds transverse, par comparaison d'une grandeur, telle qu'une force hydraulique selon la direction transversale, calculée pour une partie de l'assemblage à l'aide d'un premier modèle, avec ladite grandeur calculée pour ladite partie de l'assemblage à l'aide d'un second modèle, distinct du premier modèle ;
- la relation du coefficient de perte de charge transverse en fonction du nombre de Reynolds transverse est calculée par interpolation de plusieurs valeurs du coefficient de perte de charge transverse déterminées pour une pluralité de comparaisons effectuées ;
- au moins une première grille parmi les grilles comprend en outre des moyens additionnels de mélange propres à générer un écoulement présentant au moins une vitesse transverse suivant la direction transversale, et au moins une deuxième grille parmi les grilles ne comporte pas de moyen additionnel de mélange, et
  une première relation du coefficient de perte de charge transverse en fonction du nombre de Reynolds transverse est calculée pour une première partie de l'assemblage comportant la première grille, et une deuxième relation du coefficient de perte de charge transverse en fonction du nombre de Reynolds transverse est calculée pour une deuxième partie de l'assemblage comportant la deuxième grille ;
- lors de l'étape i), le coefficient de perte de charge axiale dans le jeu est déterminé, pour une valeur de la dimension du jeu, par comparaison d'une grandeur, telle qu'une force hydraulique selon la direction transverse, calculée pour une partie de l'assemblage à l'aide d'un premier modèle, avec ladite grandeur calculée pour ladite partie de l'assemblage à l'aide d'un second modèle, distinct du premier modèle ;
- la relation du coefficient de perte de charge axiale dans le jeu en fonction de ladite dimension du jeu est calculée par interpolation de plusieurs valeurs du coefficient de perte de charge axiale dans le jeu entre les grilles, déterminées pour une pluralité de comparaisons effectuées ;
- lors de l'étape i), les coefficients de perte de charge autres que le coefficient de perte de charge transverse dans les assemblages et le coefficient de perte de charge axiale dans le jeu entre les grilles présentent chacun une valeur prédéterminée, de préférence une valeur constante prédéterminée ;
- la cuve comporte un orifice d'entrée du fluide et un orifice de sortie du fluide, le coeur comporte une plaque inférieure et une plaque supérieure, les assemblages s'étendant entre les plaques inférieure et supérieure, le coeur présentant un volume délimité par des première et seconde interfaces suivant la direction axiale, les première et seconde interfaces correspondant respectivement aux plaques inférieure et supérieure, et
  le procédé comprend en outre les étapes suivantes :

  + déterminer au moins un volume additionnel à l'intérieur de la cuve, le volume additionnel étant externe au volume du coeur et situé à une extrémité de celui-ci suivant la direction axiale, le volume additionnel étant délimité par deux interfaces suivant la direction axiale, une des deux interfaces du volume additionnel étant la première interface ou la seconde interface,
  + calculer, pour le volume additionnel et à l'aide d'équations de bilan de la masse du fluide, de bilan de la quantité de mouvement du fluide et de bilan de l'énergie du fluide, la pression du fluide et la ou les composantes de la vitesse du fluide, à partir d'une valeur initiale de la vitesse ou de la pression en l'une des interfaces du volume additionnel et d'une valeur initiale de la vitesse ou de la pression en l'autre des interfaces du volume additionnel,
  + calculer, pour le volume du coeur, la pression du fluide et la ou les composantes de la vitesse du fluide, à partir d'une valeur initiale de la vitesse ou de la pression du fluide en la première interface et d'une valeur initiale de la vitesse ou de la pression du fluide en la seconde interface et selon l'étape ii), et

le calcul de la pression du fluide et de la ou des composantes de la vitesse du fluide est d'abord effectué pour un premier volume parmi le volume additionnel et le volume du coeur et notamment en l'interface parmi les première et seconde interfaces qui est commune au volume additionnel et au volume du coeur,

puis le calcul de la pression du fluide et de la ou les composantes de la vitesse du fluide est effectué pour le second volume parmi le volume additionnel et le volume du coeur, la valeur initiale de la vitesse ou de la pression en l'interface commune au volume additionnel et au volume du coeur et pour cette étape de calcul associée au second volume étant alors la valeur de la grandeur correspondante parmi la vitesse et la pression calculée précédemment en ladite interface pour le premier volume ;

- les équations de bilan de la masse, de bilan de la quantité de mouvement et de bilan de l'énergie sont respectivement les suivantes :

$$\frac{\partial \rho}{\partial t} + \nabla(\rho V) = S_m$$

$$\frac{\partial(\rho V)}{\partial t} + \nabla \cdot (\rho V \otimes V) = -\nabla P + \nabla \cdot \tau + \rho F + S_i$$

$$\frac{\partial(\rho E)}{\partial t} + \nabla \cdot \left[(\rho E + P) \times V)\right] = \nabla \cdot (\tau \cdot V) + \rho F \cdot V - \nabla \cdot Q + R + S_e$$

où $\nabla$ est l'opérateur nabla de dérivation spatiale du premier ordre, $P$ est la composante de la pression du fluide, $V$ est un vecteur comportant la ou les composantes de la vitesse du fluide, $p$ est la masse volumique du fluide, $t$ est le temps, $\tau$ est le tenseur des contraintes visqueuses, $F$ est un vecteur comportant la ou les composantes de la résultante des forces massiques s'exerçant dans le fluide, $E$ est une énergie totale par unité de masse, $Q$ est un vecteur comportant la ou les composantes du flux de chaleur perdue par conduction thermique, $R$ est la perte de chaleur volumique due au rayonnement, $S_m$ est la source de masse, $S_i$ est la source de quantité de mouvement, et $S_e$ est la source d'énergie ;

- l'étape de calcul pour le premier volume est réitérée avec, comme valeur initiale de la vitesse ou de la pression en ladite interface commune et pour cette réitération de l'étape de calcul associée au premier volume, la valeur de la grandeur correspondante parmi la vitesse et la pression calculée lors de l'étape effectuée précédemment en ladite interface pour le second volume, et
l'étape de calcul pour le second volume est réitérée avec, comme valeur initiale de la vitesse ou de la pression en ladite interface commune et pour cette réitération de l'étape de calcul associée au second volume, la valeur de la grandeur correspondante parmi la vitesse et la pression calculée précédemment en ladite interface pour le premier volume lors de la réitération ;

- deux volumes additionnels sont déterminés lors de l'étape de détermination : un volume additionnel amont situé en amont du volume du coeur suivant le sens de circulation du fluide et un volume additionnel aval situé en aval du volume du coeur suivant le sens de circulation du fluide, la première interface du volume du coeur étant commune avec le volume additionnel amont et la seconde interface du volume du coeur étant commune avec le volume additionnel aval, et
le calcul de la pression du fluide et de la ou les composantes de la vitesse du fluide est effectué :

a) en la première interface, d'abord pour un premier volume parmi le volume additionnel amont et le volume du coeur, puis pour un deuxième volume parmi le volume additionnel amont et le volume du coeur, la valeur initiale de la vitesse ou de la pression en la première interface pour l'étape de calcul associée au deuxième volume étant la grandeur correspondante parmi la vitesse et la pression calculée précédemment en la première interface lors de l'étape de calcul associée au premier volume, et
b) en la seconde interface, d'abord pour un troisième volume parmi le volume additionnel aval et le volume du coeur, puis pour un quatrième volume parmi le volume additionnel aval et le volume du coeur, la valeur initiale de la vitesse ou de la pression en la seconde interface pour l'étape de calcul associée au quatrième volume étant la grandeur correspondante parmi la vitesse et la pression calculée précédemment en la seconde interface lors de l'étape de calcul associée au troisième volume.

L'invention a également pour objet un produit programme d'ordinateur comportant des instructions logicielles qui, lorsqu'elles sont mises en oeuvre par un ordinateur, met en oeuvre un procédé de simulation tel que défini ci-dessus.
L'invention a également pour objet un procédé de calcul d'une déformation mécanique d'au moins un assemblage d'un coeur d'un réacteur nucléaire, le réacteur nucléaire comprenant une cuve et le coeur disposé à l'intérieur de la cuve, la déformation mécanique du ou de chaque assemblage étant fonction de l'écoulement d'un fluide à l'intérieur de la cuve, dans lequel l'écoulement du fluide est simulé avec un procédé de simulation tel que défini ci-dessus.

L'invention a également pour objet un produit programme d'ordinateur comportant des instructions logicielles qui, lorsqu'elles sont mises en oeuvre par un ordinateur, met en oeuvre un procédé de calcul de la déformation mécanique tel que défini ci-dessus.

Ces caractéristiques et avantages de l'invention apparaîtront à la lecture de la description qui va suivre, donnée uniquement à titre d'exemple non limitatif, et faite en référence aux dessins annexés, sur lesquels :

- la figure 1 est une représentation schématique d'un réacteur nucléaire à eau pressurisée, comportant une cuve et un coeur disposé à l'intérieur de ladite cuve, le coeur comportant des assemblages de combustible nucléaire,
- la figure 2 est une vue en coupe horizontale, au niveau du coeur, du réacteur de la figure 1,
- la figure 3 est une vue schématique de deux assemblages du coeur de la figure 1, les assemblages s'étendant suivant une direction axiale, à savoir la direction verticale, chaque assemblage comportant des crayons de combustible nucléaire et des grilles de maintien des crayons, les deux assemblages étant espacés l'un de l'autre, suivant une direction transversale perpendiculaire à la direction axiale, par un premier jeu entre les grilles respectives des deux assemblages et par un deuxième jeu entre les crayons respectifs des deux assemblages,
- la figure 4 est une vue schématique d'un crayon de la figure 3,
- la figure 5 est une représentation schématique en vue de dessus des premier et deuxième jeux de la figure 3,
- la figure 6 est un organigramme du procédé de simulation selon un premier aspect de l'invention,
- la figure 7 est une vue du débit du fluide en entrée du coeur calculé à l'aide d'un procédé de simulation de l'état de la technique,
- la figure 8 est une vue analogue à celle de la figure 7, obtenue à l'aide du procédé de simulation selon le premier aspect de l'invention,
- la figure 9 est un organigramme du procédé de simulation selon un deuxième aspect de l'invention,
- les figures 10 et 11 sont des vues de la vitesse transverse, respectivement de la vitesse axiale, du fluide à l'intérieur du coeur et en aval de la première grille des assemblages à partir d'une plaque inférieure du coeur, calculées à l'aide du procédé de simulation selon le deuxième aspect de l'invention,
- les figures 12 et 13 sont des représentations schématiques en vue de dessus des déformations des assemblages obtenues, d'une part, à l'aide d'un procédé de calcul de déformation mettant en oeuvre les premier et deuxième aspects du procédé de simulation selon l'invention, et d'autre part, à l'aide de mesures effectuées, pour la troisième grille des assemblages à partir d'une plaque inférieure du coeur, et respectivement pour la huitième grille à partir de ladite plaque inférieure, et
- les figures 14 et 15 sont des représentations schématiques en vue de côté des déformations des assemblages obtenues à l'aide du procédé de calcul de déformation mettant en oeuvre les premier et deuxième aspects du procédé de simulation selon l'invention, et respectivement à l'aide de mesures effectuées, pour une rangée d'assemblages du coeur.

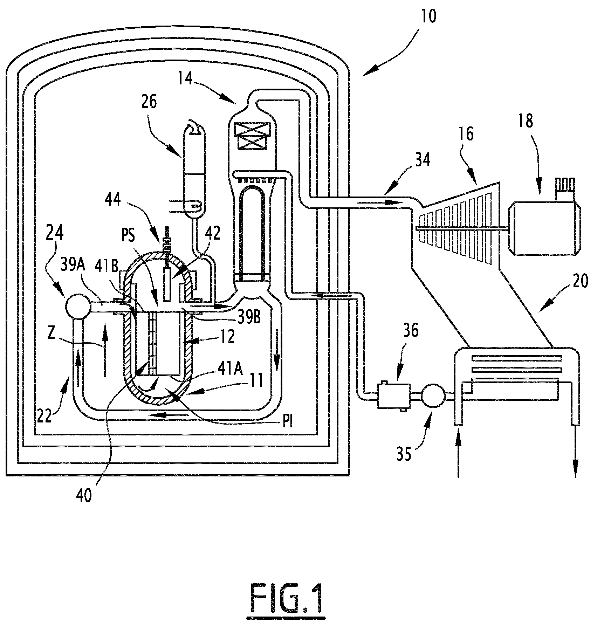

Sur la figure 1, un réacteur nucléaire 10 comprend, comme connu en soi, une cuve 11 et un coeur 12 disposé à l'intérieur de la cuve 11.

Le réacteur nucléaire 10 comprend également un ou plusieurs générateurs de vapeur 14, une ou plusieurs turbines 16 chacune couplée à un générateur 18 d'énergie électrique, et un ou plusieurs condenseurs 20, un seul de chacun de ces éléments étant représenté sur la figure 1.

Le réacteur nucléaire 10 comprend en outre un circuit primaire 22 équipé de pompes 24 et dans lequel circule un fluide, selon le trajet matérialisé par les flèches sur la figure 1. Ce fluide remonte notamment à l'intérieur de la cuve 11 au travers du coeur 12 pour y être réchauffé en assurant la réfrigération et la modération dans le coeur 12. Le circuit primaire 22 comprend en outre un pressuriseur 26 permettant de réguler la pression du fluide circulant dans le circuit primaire 22.

Le réacteur nucléaire 10 est, par exemple, un réacteur à eau pressurisée, également appelé réacteur PWR (de l'anglais *Pressurized Water Reactor*), et le fluide circulant dans le circuit primaire 22 est alors de l'eau sous pression.

En variante, le réacteur nucléaire 10 est un réacteur à eau bouillante, également appelé réacteur BWR (de l'anglais *Boiling Water Reactor*), et le fluide circulant dans le circuit primaire est alors également de l'eau sous pression, sous forme de vapeur dans la partie supérieure du coeur, la pression étant généralement inférieure à celle de l'eau circulant dans le circuit primaire du réacteur à eau pressurisée. En variante, le réacteur nucléaire 10 est un réacteur refroidi au sodium, aux sels fondus ou au gaz.

Le réacteur nucléaire 10 comprend un circuit secondaire 34 relié au générateur de vapeur 14. L'eau du circuit primaire 22 alimente le générateur de vapeur 14 où elle est refroidie en assurant la vaporisation d'eau, la vapeur produite par le générateur de vapeur 14 étant canalisée par le circuit secondaire 34 vers la turbine 16, puis vers le condenseur 20 où cette vapeur est condensée par échange de chaleur indirect avec de l'eau de refroidissement circulant dans le condenseur 20. Le circuit secondaire 34 comprend, en aval du condenseur 20, une pompe 35 et un réchauffeur 36.

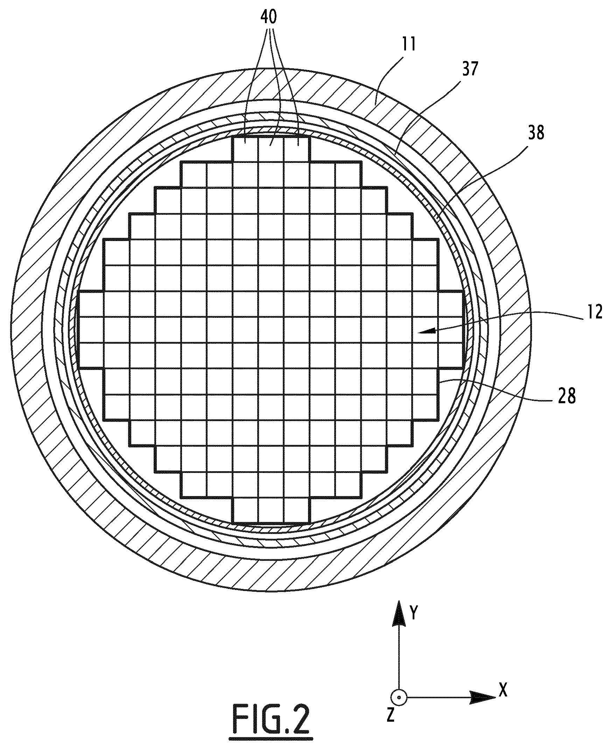

Le réacteur nucléaire 10 comprend un écran thermique 37, une enveloppe du coeur 38 et un réflecteur 28, visibles sur la figure 2 et disposés à l'intérieur de la cuve 11.

La cuve 11 comporte un orifice 39A d'entrée du fluide et un orifice 39B de sortie du fluide, les orifices d'entrée et de sortie 39A, 39B étant connectés au circuit primaire 22.

De manière classique également, le coeur 12 comprend des assemblages 40 de combustible nucléaire qui sont chargés dans la cuve 11 et s'étendent suivant une direction axiale, telle que la direction verticale Z.

Le coeur 12 comprend typiquement plus d'une centaine d'assemblages 40. Dans l'exemple d'un réacteur de 900 MWe illustré en figure 2, le coeur 12 comprend 157 assemblages 40.

La figure 2 montre en vue de dessus un exemple de répartition de ces différents assemblages 40 au sein du coeur 12. Chaque carré y matérialise un assemblage 40.

Le coeur 12 comprend également, comme connu en soi, une plaque inférieure 41 A et une plaque supérieure 41B disposées de part et d'autre des assemblages 40 suivant la direction axiale lorsque le réacteur 10 est en fonctionnement, les assemblages 40 étant déposés sur la plaque inférieure 41 A et la plaque supérieure 41B étant disposée au-dessus des assemblages 40, en contact avec leur extrémité supérieure, comme représenté sur la figure 1. Le coeur 12 présente un volume $Vol_C$ délimité suivant la direction axiale par des première et seconde interfaces, les première et seconde interfaces correspondant respectivement aux plaques inférieure et supérieure 41 A, 41 B, et selon la direction latérale par le réflecteur 28.

La cuve 11 comporte deux volumes additionnels externes au volume du coeur $Vol_C$ et situés de part et d'autre de celui-ci suivant la direction axiale Z, à savoir un volume additionnel amont $Vol_{PI}$ situé en amont du volume du coeur $Vol_C$ suivant le sens de circulation du fluide, correspondant dans l'exemple décrit à une zone PI située au-dessous du coeur 12 selon la direction axiale Z, ladite zone étant également appelée plenum inférieur, et un volume additionnel aval $Vol_{PS}$ situé en aval du volume du coeur $Vol_C$ suivant le sens de circulation du fluide, correspondant dans l'exemple décrit à une zone PS située au-dessus du coeur 12 selon la direction axiale Z, ladite zone étant également appelée plenum supérieur, comme représenté sur la figure 1. Chaque volume additionnel $Vol_{PI}$, $Vol_{PS}$ est délimité par deux interfaces suivant la direction axiale Z, une des deux interfaces du volume additionnel $Vol_{PI}$, $Vol_{PS}$ étant la première interface ou la seconde interface. Dans l'exemple de réalisation décrit, l'interface commune entre le volume additionnel amont $Vol_{PI}$ et le volume du coeur $Vol_C$ est la première interface, et l'interface commune entre le volume du coeur $Vol_C$ et le volume additionnel aval $Vol_{PS}$ est la seconde interface.

Le volume du coeur $Vol_C$ comporte la première interface avec le volume additionnel amont $Vol_{PI}$ et la seconde interface avec le volume additionnel aval $Vol_{PS}$. Le volume additionnel amont $Vol_{PI}$ est traversé par le fluide circulant depuis l'orifice d'entrée 39A vers le coeur 12, et le volume additionnel aval $Vol_{PS}$ est traversé par le fluide circulant depuis le coeur 12 vers l'orifice de sortie 39B.

Chaque interface du volume du coeur $Vol_C$ et des volumes additionnels amont et aval $Vol_{PI}$, $Vol_{PS}$ est également appelée frontière, étant donné que chaque interface forme une frontière avec l'extérieur pour le volume suivant la direction considérée. Chaque interface est par exemple en forme d'une surface perpendiculaire à la direction axiale Z.

Dans l'exemple de réalisation décrit, le volume du coeur $Vol_C$ et les volumes additionnels amont et aval $Vol_{PI}$, $Vol_{PS}$ sont chacun en forme d'un cylindre avec une génératrice parallèle à la direction axiale Z. Chaque interface du volume du coeur $Vol_c$ est, par exemple, en forme d'un disque plan dans un plan perpendiculaire à la direction axiale Z.

Le coeur 12 comprend des grappes de commande 42, visibles sur la figure 1, qui sont disposées dans la cuve 11 au-dessus de certains assemblages 40. Une seule grappe 42 est représentée sur la figure 1. Les grappes 42 sont déplaçables par des mécanismes 44 pour venir s'insérer dans les assemblages 40 qu'elles surplombent, ou en être extraites. Classiquement, chaque grappe de commande 42 comprend des crayons absorbants qui comportent un ou plusieurs matériaux absorbant les neutrons et éventuellement des crayons inertes, c'est-à-dire qui n'ont pas de capacité spécifique d'absorption des neutrons. Le déplacement vertical des grappes 42 permet de régler la réactivité dans le coeur 12 et autorise des variations de la puissance globale P fournie par le coeur 12 depuis la puissance nulle jusqu'à la puissance nominale PN, en fonction de l'enfoncement des grappes de commande 42 dans les assemblages 40.

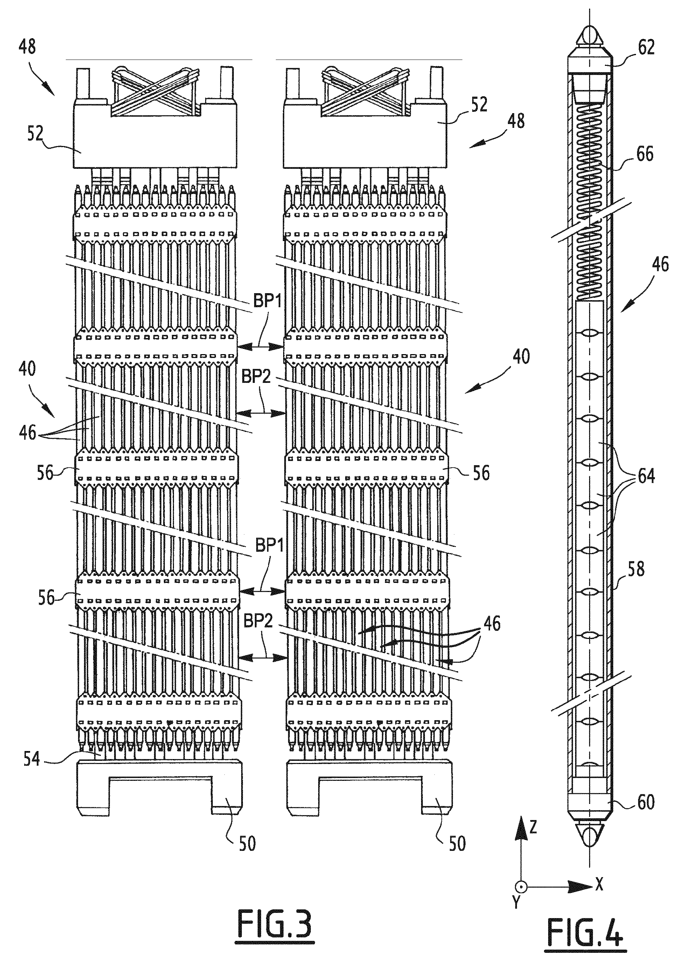

Comme illustré par la figure 3, chaque assemblage 40 comprend de manière classique un réseau de crayons 46 de combustible nucléaire et un squelette 48 de support des crayons 46. Le squelette 48 comprend classiquement un embout inférieur 50, un embout supérieur 52, des tubes-guides 54 reliant les deux embouts 50, 52 et destinés à recevoir les crayons des grappes de commande du réacteur 10, et des grilles 56 de maintien des crayons 46.

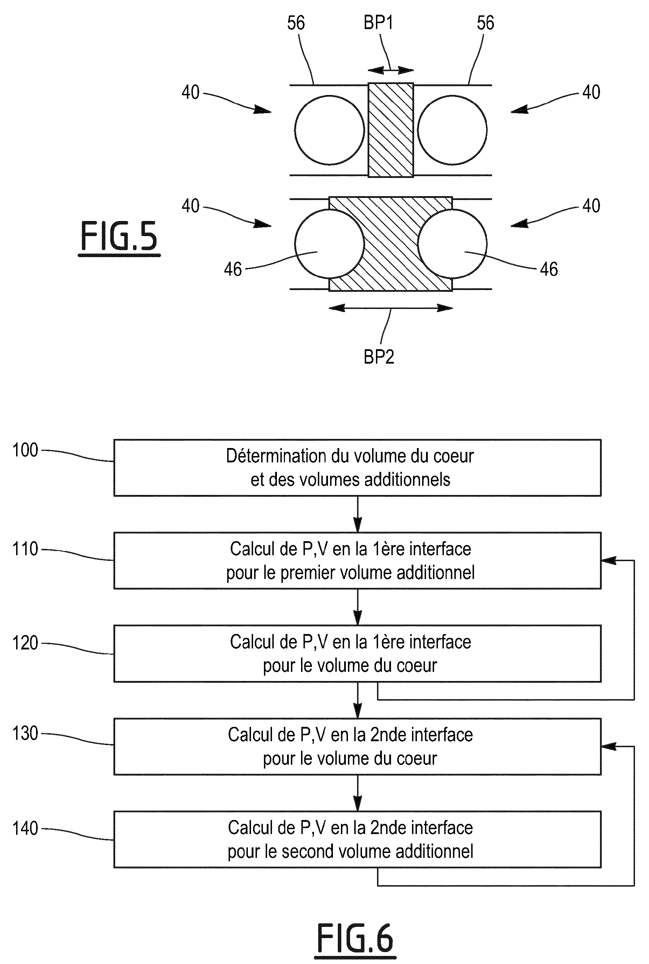

Sur la figure 3 sont représentés deux assemblages 40 adjacents, c'est-à-dire deux assemblages 40 correspondant à des carrés voisins selon une direction transversale X ou Y, perpendiculaire à la direction axiale Z, sur la représentation de la figure 2. Les deux assemblages adjacents 40 sont disposés successivement et espacés l'un de l'autre, suivant ladite direction transversale, par un premier jeu BP1 entre les grilles 56 respectives des deux assemblages 40 et par un deuxième jeu BP2 entre les crayons 46 respectifs des deux assemblages 40, comme représenté sur les figures 3 et 5.

Sur la figure 2, les assemblages 40 sont sensiblement alignés suivant deux directions X, Y respectives dans le plan horizontal perpendiculaire à la direction verticale Z, et l'homme du métier comprendra que lorsque les deux assemblages 40 successifs sont alignés suivant la direction X, alors la direction transversale associée aux premier et deuxième jeux BP1, BP2 correspond à cette direction X. De manière analogue, lorsque les deux assemblages 40 successifs sont alignés suivant la direction Y, alors la direction transversale associée aux premier et deuxième jeux BP1, BP2 correspond à cette direction Y.

La dimension du premier jeu BP1 est égale à la distance entre des faces externes des grilles 56 respectives des deux assemblages 40 suivant la direction transversale, pour une position donnée suivant la direction axiale Z. Par convention, la dimension du deuxième jeu BP2 est égale à la distance entre les centres des deux crayons 46 périphériques respectifs des deux assemblages, pour une position donnée suivant la direction axiale Z. comme représenté sur la figure 5.

Comme illustré par la figure 4, chaque crayon 46 comprend, de manière classique, une gaine 58 sous forme d'un tube fermé à son extrémité inférieure par un bouchon inférieur 60 et à son extrémité supérieure par un bouchon supérieur 62. Le crayon 46 comprend une série de pastilles 64 de combustible nucléaire empilées dans la gaine 58 et prenant appui contre le bouchon inférieur 60. Un ressort de maintien 66 est disposé dans le tronçon supérieur de la gaine 58 pour prendre appui sur le bouchon supérieur 62 et sur la pastille 64 supérieure.

Classiquement, les pastilles 64 sont à base d'oxyde d'uranium ou d'un mélange d'oxydes d'uranium et de plutonium et la gaine 58 en alliage de zirconium.

Un procédé de simulation de l'écoulement du fluide à l'intérieur de la cuve 11 du réacteur nucléaire 10 selon un premier aspect de l'invention va désormais être décrit à l'aide de l'organigramme de la figure 6.

Le procédé de simulation selon le premier aspect est destiné à être mis en oeuvre par un ordinateur comportant un processeur et une mémoire associée au processeur, la mémoire étant apte à stocker un premier produit programme d'ordinateur. Le premier produit programme d'ordinateur comporte des instructions logicielles et met en oeuvre le procédé de simulation selon le premier aspect lorsque lesdites instructions logicielles sont exécutées par l'ordinateur.

Lors de l'étape initiale 100, le volume du coeur $Vol_C$ délimité suivant la direction axiale Z par les plaques inférieure et supérieure 41 A, 41 B, correspondant aux première et seconde interfaces est déterminé. Au moins un volume additionnel $Vol_{PI}$, $Vol_{PS}$ est également déterminé à l'intérieur de la cuve 11, le volume additionnel $Vol_{PI}$, $Vol_{PS}$ étant externe au volume du coeur $Vol_C$ et situé à une extrémité de celui-ci suivant la direction axiale Z. Le volume additionnel $Vol_{PI}$, $Vol_{PS}$ est délimité par deux interfaces suivant la direction axiale Z, une des deux interfaces du volume additionnel $Vol_{PI}$, $Vol_{PS}$ étant la première interface ou la seconde interface. Autrement dit, le volume du coeur $Vol_C$ comporte une interface avec le volume additionnel $Vol_{PI}$, $Vol_{PS}$, le volume additionnel $Vol_{PI}$, $Vol_{PS}$ étant traversé par le fluide circulant entre le coeur 12 et un orifice parmi l'orifice d'entrée 39A et l'orifice de sortie 39B. Dans l'exemple de réalisation décrit, deux volumes additionnels sont déterminés lors de cette étape initiale, à savoir les volumes additionnels amont et aval $Vol_{PI}$, $Vol_{PS}$.

Lors de l'étape suivante 110, la ou les composantes de la vitesse V et la pression P du fluide sont calculées pour le volume additionnel amont $Vol_{PI}$, à partir d'une valeur initiale de la vitesse V ou de la pression P en l'une des interfaces du volume additionnel $Vol_{PI}$, $Vol_{PS}$ et d'une valeur initiale de la vitesse V ou de la pression P en l'autre des interfaces du volume additionnel $Vol_{PI}$, $Vol_{PS}$. La ou les composantes de la vitesse et la pression sont calculées à partir des équations de bilan, utilisées en mécanique des fluides, c'est-à-dire à partir de :

- l'équation de bilan de la masse du fluide, ou équation de continuité,
- l'équation de bilan de la quantité de mouvement du fluide, et
- l'équation de bilan de l'énergie du fluide.

Ces valeurs initiales sont également appelées conditions initiales, et sont prédéterminées au début de chaque étape de calcul de la pression et de la ou des composantes de la vitesse associée à un volume considéré parmi le volume du coeur $Vol_C$ et les volumes additionnels amont et aval $Vol_{PI}$, $Vol_{PS}$. Dans l'exemple de réalisation décrit, les valeurs initiales prédéterminées sont les composantes de la vitesse V en entrée dudit volume $Vol_{PI}$, $Vol_{PS}$ et la composante, également appelée valeur, de la pression P du fluide en sortie dudit volume $Vol_{PI}$, $Vol_{PS}$.

En variante, les valeurs initiales prédéterminées sont la valeur de la pression P du fluide en entrée dudit volume et les composantes de la vitesse V en sortie dudit volume.

En variante encore, les valeurs initiales prédéterminées sont les composantes de la vitesse V en entrée dudit volume et les composantes de la vitesse V en sortie dudit volume.

Dans l'exemple de réalisation décrit, les composantes de la vitesse en entrée du volume additionnel amont $Vol_{PI}$ et de la pression P en sortie du volume additionnel aval $Vol_{PS}$ sont des conditions aux limites imposées par le réacteur : la vitesse en entrée du volume additionnel amont $Vol_{PI}$ est déterminée par le débit des pompes 24, et la pression P en sortie du volume additionnel aval $Vol_{PS}$ est celle mesurée à l'entrée du générateur de vapeur 14. Ces deux valeurs sont fixes tout au long du calcul.

Les équations de bilan prennent différentes formes selon les approximations choisies et les opérateurs différentiels utilisés. Par exemple, la formulation différentielle générale de ces équations (équations de Navier-Stokes) s'écrit respectivement :

bilan de la masse du fluide :

$$\frac{\partial \rho}{\partial t} + \nabla(\rho V) = S_m \tag{1}$$

bilan de la quantité de mouvement du fluide :

$$\frac{\partial(\rho V)}{\partial t} + \nabla \cdot (\rho V \otimes V) = -\nabla P + \nabla \cdot \tau + \rho F + S_i \tag{2}$$

bilan de l'énergie du fluide :

$$\frac{\partial(\rho E)}{\partial t} + \nabla \cdot [(\rho E + P) \times V)] = \nabla \cdot (\tau \cdot V) + \rho F \cdot V - \nabla \cdot Q + R + S_e \tag{3}$$

où $\nabla$ est l'opérateur nabla de dérivation spatiale du premier ordre,
$P$ est la pression du fluide,
$V$ est un vecteur comportant la ou les composantes de la vitesse du fluide,
$\rho$ est la masse volumique du fluide,
$t$ est le temps,
$\tau$ est le tenseur des contraintes visqueuses,
$F$ est un vecteur comportant la ou les composantes de la résultante des forces massiques s'exerçant dans le fluide,
$E$ est une énergie totale par unité de masse,
$Q$ est un vecteur comportant la ou les composantes du flux de chaleur perdue par conduction thermique,
$R$ est la perte de chaleur volumique due au rayonnement,
$S_m$ est la source de masse,
$S_i$ est la source de quantité de mouvement, et
$S_e$ est la source d'énergie.

En coordonnées cartésiennes orthonormées ces équations s'écrivent, par exemple, de la manière suivante pour un calcul sans prise en compte des effets thermiques (hydraulique pur) :

équation de conservation de la masse :

$$\frac{\partial \rho}{\partial t} + \sum_{i=1}^{3} \frac{\partial}{\partial x_i}(\rho v_i) = S_m \tag{4}$$

équation de conservation de la quantité de mouvement (pour j = 1, 2, 3) :

$$\frac{\partial(\rho v_j)}{\partial t} + \sum_{i=1}^{3} \frac{\partial}{\partial x_i}(\rho v_i v_j - \tau_{ij}) = -\frac{\partial P}{\partial x_i} + S_i \tag{5}$$

où $t$ est le temps,
$\rho$ est la masse volumique du fluide,
$x_i$ est la coordonnée selon la direction i (i = 1, 2, 3),
$v_i$ est la vitesse du fluide dans la direction i
$P$ est la pression du fluide,
$S_m$ est la source de masse,
$S_i$ est la source de quantité de mouvement
$\tau_{ij}$ est la contrainte visqueuse, avec

$$\tau_{ij} = 2\mu s_{ij} - \frac{2}{3}\mu \frac{\partial u_k}{\partial x_k} \delta_{ij} \qquad (6)$$

où $\mu$ désigne la viscosité dynamique du fluide et $\delta_{ij}$ le delta de Kronecker.

A ces équations viennent d'ajouter les équations de fermeture qui fournissent les caractéristiques du fluide : masse volumique, viscosité, chaleur spécifique, conductivité et compressibilité en tout point du volume étudié.

Le modèle de calcul associé aux équations précitées de bilan de la masse, de bilan de la quantité de mouvement et de bilan de l'énergie est également appelé modèle détaillé.

En variante, la ou les composantes de la vitesse V et la pression P du fluide sont calculées en supposant par exemple que le fluide est newtonien et incompressible : $\rho$ et $\mu$ sont alors constantes.

Par ailleurs, les transitoires hydrauliques dans les réacteurs nucléaires en fonctionnement normal étant relativement lents, ils peuvent être négligés et les calculs hydrauliques sont alors réalisés comme une succession d'états permanents ponctuels et les équations de Navier Stokes s'écrivent alors :

$$\nabla(\rho V) = S_m \qquad (7)$$

$$\rho(V.\nabla)V = -\nabla P + \mu\left[\nabla^2 V + \frac{1}{3}\nabla(\nabla \cdot V)\right] + \rho F + S_e \qquad (8)$$

où $\mu$ désigne la viscosité dynamique du fluide, supposée par exemple constante.

Le modèle de calcul associé à l'équation de Navier Stokes est également appelé modèle semi-détaillé, car l'équation de Navier Stokes est obtenue à partir des équations précitées de bilan de la masse, de bilan de la quantité de mouvement et de bilan de l'énergie en effectuant les hypothèses précitées vérifiées par les fluides newtoniens.

Lors de l'étape 110, la ou les composantes de la vitesse V et la pression P du fluide sont calculées sur l'ensemble du volume additionnel amont VolPI, et en particulier pour la première interface afin d'effectuer un couplage de calcul avec la ou les composantes de la vitesse V et la pression P du fluide qui seront calculées pour le volume du coeur VolC lors de l'étape suivante 120.

Le fluide circulant du volume additionnel amont $Vol_{PI}$ vers le volume du coeur $Vol_C$, le calcul effectué pour le volume additionnel amont $Vol_{PI}$ permet notamment de prédéterminer la ou des composantes d'une grandeur parmi la vitesse V et la pression P du fluide en sortie dudit volume additionnel $Vol_{PI}$, c'est-à-dire en la première interface qui correspond aussi à l'entrée du volume du coeur $Vol_C$.

Dans l'exemple de réalisation décrit, on calcule donc notamment la ou les composantes de la vitesse V du fluide en sortie du volume additionnel amont $Vol_{PI}$, c'est-à-dire du volume du plenum inférieur, à partir de la vitesse du fluide en entrée du volume additionnel amont $Vol_{PI}$ et en imposant une valeur prédéterminée de la pression P du fluide en sortie. Autrement dit, on calcule une répartition du débit du fluide en sortie du volume additionnel amont $Vol_{PI}$ en imposant une répartition de la pression P du fluide en sortie dudit volume additionnel amont $Vol_{PI}$.

Lors de l'étape 110, le calcul de la pression P du fluide et de la ou des composantes de la vitesse V est effectué de préférence à l'aide du modèle semi-détaillé, c'est-à-dire à l'aide des équations de Navier Stokes (7) et (8). Ce modèle semi-détaillé fournit en effet une très bonne modélisation de l'écoulement du fluide tout en nécessitant une puissance de calcul moindre que le modèle détaillé.

La ou les composantes de la vitesse V et la pression P du fluide sont alors calculées lors de l'étape 120, pour tout le volume du coeur $Vol_C$ à partir de la ou des composantes d'une grandeur parmi la vitesse V et la pression P du fluide prédéterminée en sortie dudit volume, l'autre grandeur parmi la vitesse V et la pression P du fluide prédéterminée en entrée dudit volume étant alors la grandeur calculée précédemment à l'étape 110 pour le volume situé en amont, i.e. pour le volume additionnel amont $Vol_{PI}$. Autrement dit, la ou les composantes de la vitesse V et la pression P du fluide sont alors calculées lors de l'étape 120, pour tout le volume du coeur $Vol_C$ à partir d'une valeur initiale de la vitesse V ou de la pression P du fluide en la première interface et d'une valeur initiale de la vitesse V ou de la pression P du fluide en la seconde interface.

Dans l'exemple de réalisation décrit, on calcule donc notamment la pression P du fluide dans tout le volume du coeur $Vol_C$ et donc en particulier en entrée du volume du coeur $Vol_C$, c'est-à-dire en la première interface qui correspond aussi à la sortie du volume additionnel amont $Vol_{PI}$, en utilisant les valeurs de la ou des composantes de la vitesse V du fluide calculées lors de l'étape précédente en cette même première interface. Autrement dit, dans cet exemple, on calcule une répartition de la pression P du fluide en entrée du volume du coeur à partir de la répartition du débit du fluide calculée précédemment en sortie du volume du plenum inférieur.

Dans l'exemple de réalisation décrit, les valeurs connues sont les composantes de la vitesse V en entrée dudit volume $Vol_C$, calculées lors de l'étape 110, et la valeur de la pression P du fluide en sortie dudit volume $Vol_C$.

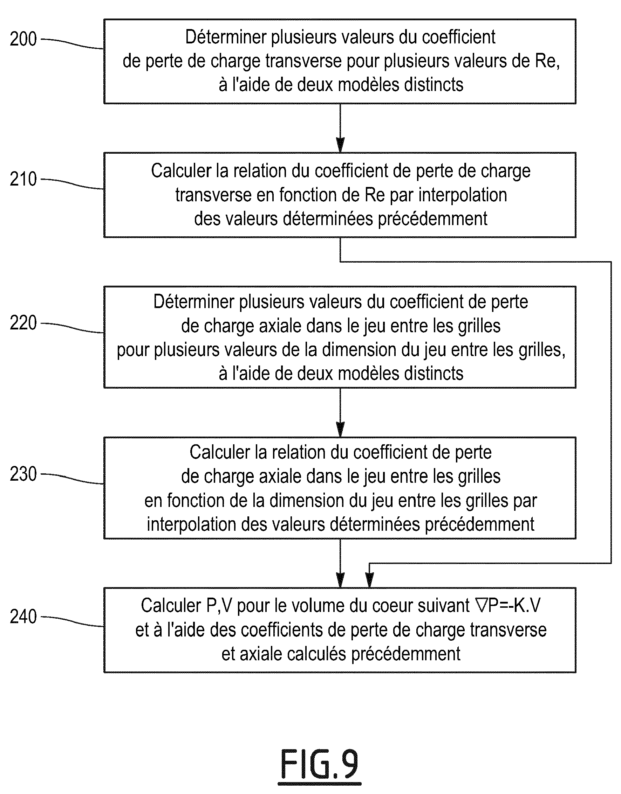

Lors de l'étape 120, pour le volume du coeur $Vol_C$, le calcul de la pression P et de la ou des composantes de la vitesse V du fluide peuvent être, par exemple, effectués à l'aide du modèle semi-détaillé. Par contre, selon l'invention, le calcul de la pression P et de la ou des composantes de la vitesse V du fluide sont en effet effectués à l'aide d'un modèle poreux particulier qui sera décrit plus en détail par la suite à l'aide de l'organigramme de la figure 9.

A l'issue de l'étape 120, le procédé retourne à l'étape 110, afin de réitérer les calculs en la première interface, ou bien le procédé passe à l'étape 130 afin d'effectuer les calculs en la seconde interface.

Lorsque le procédé retourne à l'étape 110, les calculs effectués pour le volume additionnel amont $Vol_{PI}$ sont couplés, en la première interface, aux calculs effectués pour le volume du coeur $Vol_C$ : l'étape de calcul 110 pour le volume situé en amont suivant le sens de circulation du fluide, i.e. pour le volume additionnel amont $Vol_{PI}$, est réitérée avec, comme valeur de l'autre grandeur, par exemple de la pression P du fluide en sortie dudit volume $Vol_{PI}$, la valeur calculée lors de l'étape 120 effectuée précédemment pour le volume situé en aval, i.e. pour le volume du coeur $Vol_C$. Après réitération de l'étape 110, le procédé passe à l'étape 120 afin de réitérer l'étape de calcul pour le volume du coeur $Vol_C$ situé en aval, avec comme valeur de l'autre grandeur, par exemple de la ou les composantes de la vitesse V en entrée dudit volume $Vol_C$, la nouvelle valeur calculée pour le volume additionnel amont $Vol_{PI}$ situé en amont.

Autrement dit, l'étape de calcul 110 pour le volume additionnel amont $Vol_{PI}$, est réitérée avec, comme valeur initiale de la vitesse V ou de la pression P en l'interface commune avec le volume du coeur $Vol_C$ et pour cette réitération de l'étape de calcul 110 associée au volume additionnel amont $Vol_{PI}$, la valeur de la grandeur correspondante parmi la vitesse V et la pression P calculée lors de l'étape 120 effectuée précédemment en ladite interface commune pour le volume du coeur $Vol_C$.

L'étape de calcul 120 pour le volume du coeur $Vol_C$ est réitérée avec, comme valeur initiale de la vitesse V ou de la pression P en ladite interface commune avec le volume additionnel amont $Vol_{PI}$ et pour cette réitération de l'étape de calcul 120 associée au volume du coeur $Vol_C$, la valeur de la grandeur correspondante parmi la vitesse V et la pression P calculée précédemment en ladite interface pour le volume additionnel amont $Vol_{PI}$ lors de la réitération de l'étape de calcul 110.

La réitération des étapes 110 et 120 est effectuée jusqu'à obtenir une solution convergée en la première interface, c'est-à-dire jusqu'à ce que le ratio de la valeur précédente d'une grandeur divisée par la nouvelle valeur de ladite grandeur soit inférieur à une valeur prédéfinie, par exemple $10^{-5}$. L'homme du métier choisira de préférence d'appliquer le critère de convergence à la grandeur convergeant le moins rapidement.

Dans le cas particulier de l'application de l'invention au calcul de la déformation latérale des assemblages de combustible 40, un effort hydraulique latéral selon la direction transversale X, Y est, par exemple, calculé pour chaque assemblage 40, à partir de la pression P et de la ou des composantes de la vitesse V calculées lors de l'étape 120 pour le volume du coeur $Vol_C$. L'effort hydraulique latéral est calculé à chaque itération de l'étape 120, et le calcul de la pression P et de la ou les composantes de la vitesse V est arrêté lorsque le ratio de la valeur précédente de l'effort hydraulique latéral divisée par la nouvelle valeur de l'effort hydraulique latéral est inférieur à une valeur prédéfinie, par exemple $10^{-5}$.

L'homme du métier observera qu'il est préférable de définir un critère d'arrêt en fonction des valeurs de l'effort hydraulique latéral, étant donné que la vitesse V ou la pression P convergent plus rapidement que l'effort hydraulique latéral.

Lors de l'étape 130, la ou les composantes de la vitesse V et la pression P du fluide sont calculées, pour le volume du coeur $Vol_C$, et en particulier en la seconde interface, à partir de la ou des composantes d'une grandeur parmi la vitesse V et la pression P du fluide prédéterminée en entrée dudit volume et de l'autre grandeur parmi la vitesse V et la pression P du fluide prédéterminée en sortie dudit volume.

Lors de l'étape 130, de manière analogue à l'étape 120, pour le volume du coeur $Vol_C$, les calculs de la ou des composantes de la vitesse V et de la pression P du fluide sont, par exemple, effectués à l'aide du modèle semi-détaillé. En variante, les calculs de la ou des composantes de la vitesse V et la pression P du fluide sont effectués à l'aide du modèle poreux particulier.

Dans l'exemple de réalisation décrit, la ou les composantes de la vitesse V et la pression P du fluide sont calculées lors de l'étape 130 en imposant une valeur initiale prédéterminée de la ou des composantes de vitesse en entrée et une valeur initiale prédéterminée de la pression P du fluide en sortie. On calcule donc notamment la ou les composantes de la vitesse V du fluide en sortie du volume du coeur $Vol_C$, à partir de la vitesse du fluide en entrée du volume du coeur $Vol_C$ et en imposant une valeur initiale prédéterminée de la pression P du fluide en sortie. Autrement dit, on calcule une répartition du débit du fluide en sortie du volume du coeur $Vol_C$ en imposant une répartition de la pression P du fluide en sortie dudit volume du coeur $Vol_C$.

Lors de l'étape 140, la ou les composantes de la vitesse V et la pression P du fluide sont calculées sur l'ensemble du volume additionnel aval $Vol_{PS}$, et en particulier pour la seconde interface, afin d'effectuer un couplage de calcul avec la ou les composantes de la vitesse V et la pression P du fluide qui ont été calculées précédemment lors de l'étape 130 pour le volume du coeur $Vol_C$.

La ou les composantes de la vitesse V et la pression P du fluide sont calculées lors de l'étape 140, pour le volume additionnel aval $Vol_{PS}$, à partir de la ou des composantes d'une grandeur parmi la vitesse V et la pression P du fluide prédéterminée en sortie dudit volume, l'autre grandeur parmi la vitesse V et la pression du fluide prédéterminée en entrée dudit volume étant la grandeur calculée précédemment lors de l'étape 130 pour le volume situé en amont, i.e. pour le volume du coeur $Vol_C$. Autrement dit, la pression P du fluide et la ou les composantes de la vitesse V du fluide, sont calculées lors de l'étape 140, pour le volume additionnel aval $Vol_{PS}$ à partir d'une valeur initiale de la vitesse V ou de la pression P en l'une des interfaces du volume additionnel aval $Vol_{PS}$ et d'une valeur initiale de la vitesse V ou de la pression P en l'autre des interfaces du volume additionnel aval $Vol_{PS}$.

Dans l'exemple de réalisation décrit, la pression P du fluide est calculée lors de l'étape 140 en utilisant notamment les valeurs de la ou des composantes de la vitesse V du fluide calculées lors de l'étape 130 précédente en la même seconde interface. Autrement dit, dans cet exemple, on calcule une répartition de la pression P du fluide en entrée du volume additionnel aval $Vol_{PS}$ à partir de la répartition du débit du fluide calculée précédemment en sortie du volume du coeur $Vol_C$.

Lors de l'étape 140, pour le volume additionnel aval $Vol_{PS}$, les calculs de la pression P et de la ou des composantes de la vitesse V du fluide sont, par exemple, effectués à l'aide du modèle semi-détaillé. En variante, les calculs de la pression P et de la ou des composantes de la vitesse V du fluide sont effectués à l'aide du modèle détaillé.

A l'issue de l'étape 140, le procédé retourne à l'étape 130, afin de réitérer les calculs en la seconde interface, ou bien le procédé retourne à l'étape 110 afin de réitérer les calculs en la première interface, ou encore s'arrête si une solution convergée a été obtenue.

De manière analogue à ce qui a été décrit pour la première interface, lorsque le procédé retourne à l'étape 130, les calculs effectués pour le volume additionnel aval $Vol_{PS}$ sont couplés, en la seconde interface, aux calculs effectués pour le volume du coeur $Vol_C$ : l'étape de calcul 130 pour le volume situé en amont suivant le sens de circulation du fluide, i.e. pour le volume du coeur $Vol_C$, est réitérée avec, comme valeur de l'autre grandeur, par exemple de la pression P du fluide en sortie dudit volume $Vol_C$, la valeur calculée lors de l'étape 140 effectuée précédemment pour le volume situé en aval, i.e. pour le volume additionnel aval $Vol_{PS}$. Après réitération de l'étape 130, le procédé passe à nouveau à l'étape 140 afin de réitérer l'étape de calcul pour le volume additionnel aval $Vol_{PS}$ situé en aval, avec comme valeur de l'autre grandeur, par exemple de la ou les composantes de la vitesse V en entrée dudit volume $Vol_{PS}$, la valeur calculée précédemment pour le volume du coeur $Vol_C$ situé en amont.

La réitération des étapes 130 et 140 est effectuée jusqu'à obtenir une solution convergée en la seconde interface, c'est-à-dire jusqu'à ce que le ratio de la valeur précédente d'une grandeur divisée par la nouvelle valeur de ladite grandeur est inférieur à une valeur prédéfinie, par exemple $10^{-5}$. De manière analogue, l'homme du métier choisira de préférence d'appliquer le critère de convergence à la grandeur convergeant le moins rapidement. Dans le cas particulier de l'application de l'invention au calcul de la déformation latérale des assemblages de combustible 40, un effort hydraulique latéral selon la direction transversale X, Y est, par exemple, calculé pour chaque assemblage 40, à partir de la pression P et de la ou des composantes de la vitesse V calculées lors de l'étape 130, pour le volume du coeur $Vol_C$. L'effort hydraulique latéral est calculé à chaque itération de l'étape 130 et le calcul de la pression P et de la ou les composantes de la vitesse V est arrêté lorsque le ratio de la valeur précédente de l'effort hydraulique latéral divisée par la nouvelle valeur de l'effort hydraulique latéral est inférieur à une valeur prédéfinie, telle que $10^{-5}$.

Le procédé décrit suit le sens de circulation du fluide et propage la vitesse V du fluide imposée par le débit des pompes 24 à travers la cuve 11 pour obtenir en sortie la pression P du circuit primaire mesurée à l'entrée du générateur de vapeur 14.

En variante, le procédé est inversé et suit le sens inverse à la circulation du fluide et propage à travers la cuve 11 la pression P du circuit primaire mesurée à l'entrée du générateur de vapeur 14 pour obtenir la vitesse V du fluide imposée par le débit des pompes 24.

En variante encore, le procédé combine avantageusement les deux méthodes comme décrit plus loin.

L'homme du métier notera que les étapes 120 et 130 correspondent à une même étape de calcul de la pression P et de la ou des composantes de la vitesse V du fluide dans le volume du coeur $Vol_C$.

En variante et de manière préférentielle, les étapes de calcul sont avantageusement réalisées dans l'ordre suivant :

- étape 100 de calcul des volumes ;
- étape 110 en utilisant, comme valeurs initiales, en vitesse d'entrée la vitesse correspondant au débit délivré par les pompes 24 (condition aux limites invariable tout au long du calcul) et en pression de sortie une pression initiale quelconque qui sera convergée au cours des étapes ;
- étape 140 en utilisant, comme valeurs initiales, en pression de sortie la pression du primaire 22 mesurée à l'entrée du générateur de vapeur 14 (condition aux limites invariable tout au long du calcul) et en vitesse d'entrée une vitesse initiale quelconque qui sera convergée au cours des étapes ;

- étape 120, 130 de calcul du volume du coeur, en utilisant comme valeurs initiales, en vitesse d'entrée la vitesse calculée à la première interface à l'étape 110 et en pression de sortie la pression calculée à la seconde interface à l'étape 140 ; et

- réitération des étapes 110, 140 et 120, 130 jusqu'à la convergence du calcul. Les étapes 110 et 140 à partir de la première itération sont réalisées en injectant respectivement en sortie du volume additionnel amont Vol$_{PI}$ la pression calculée lors de l'étape précédente 120, 130 de calcul pour le volume du coeur et en entrée du volume additionnel aval Vol$_{PS}$ la vitesse calculée lors de l'étape précédente 120, 130 de calcul pour le volume du coeur.

Les étapes 110 et 140 sont réalisables simultanément.

Pour le couplage en l'interface commune, les modèles de calcul utilisés pour le volume situé en aval et pour le volume situé en amont suivant le sens de circulation du fluide sont de préférence distincts, les modèles utilisés étant, par exemple, le modèle semi-détaillé pour le volume additionnel Vol$_{PI}$, Vol$_{PS}$ correspondant et le modèle poreux particulier pour le volume du coeur Vol$_C$. En variante, les modèles de calcul utilisés pour le volume situé en aval et pour celui situé en amont sont identiques, à savoir par exemple le modèle semi-détaillé.

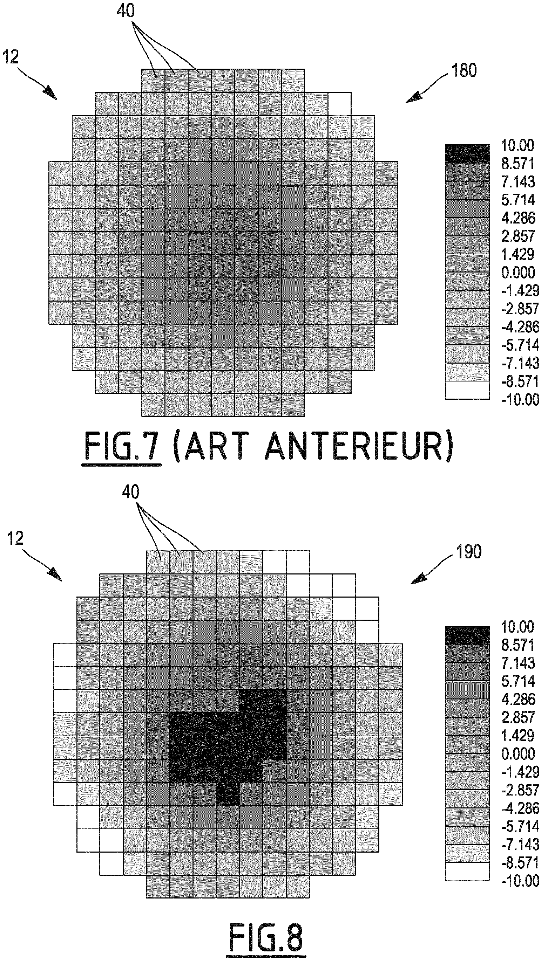

Le procédé de simulation selon le premier aspect de l'invention permet alors d'offrir une meilleure modélisation de l'écoulement, comme le montre la comparaison des figures 7 et 8, représentant une vue 180 du débit du fluide en entrée du coeur calculé à l'aide d'un procédé de simulation de l'état de la technique, et respectivement une vue 190 du débit du fluide en entrée du coeur calculé à l'aide du procédé de simulation selon le premier aspect de l'invention. Sur les vues 180 et 190, les différentes valeurs de débit au niveau des différents assemblages 40 en entrée du coeur sont représentées en pourcentage de variation par rapport à une valeur nominale du débit. La vue 190 montre alors une plus grande discrimination entre les valeurs du débit calculées selon l'assemblage 40 concerné.

La modélisation obtenue avec le procédé de simulation selon le premier aspect de l'invention (figure 8) est donc plus précise que celle obtenue avec le procédé de simulation de l'état de la technique (figure 7) dans lequel les volumes additionnels ne sont pas modélisés.

Le procédé de simulation de l'écoulement du fluide à l'intérieur de la cuve 11 du réacteur nucléaire 10 selon un deuxième aspect de l'invention, indépendant du premier aspect décrit précédemment, va désormais être décrit à l'aide de l'organigramme de la figure 9.

Le procédé de simulation selon le deuxième aspect est destiné à être mis en oeuvre par un ordinateur comportant un processeur et une mémoire associée au processeur, la mémoire étant apte à stocker un deuxième produit programme d'ordinateur. Le deuxième produit programme d'ordinateur comporte des instructions logicielles, et met en oeuvre le procédé de simulation selon le deuxième aspect lorsque lesdites instructions logicielles sont exécutées par l'ordinateur.

Le procédé de simulation selon le deuxième aspect concerne un modèle poreux particulier basé sur l'équation suivante :

$$\nabla P = -K \times V \tag{9}$$

où P est la pression du fluide,
K est une matrice comportant des coefficients de pertes de charge, et
V est le vecteur comportant la ou les composantes de la vitesse du fluide

Le procédé de simulation selon ce deuxième aspect vise à calculer la ou les composantes d'une grandeur parmi la vitesse V du fluide et la pression P du fluide, à partir de la ou des composantes de l'autre grandeur parmi la vitesse V du fluide et la pression P du fluide.

Les coefficients de pertes de charge de la matrice K dépendent notamment d'un nombre de Reynolds transverse suivant la direction transversale X, Y et de la position X, Y, Z dans le coeur 12, par exemple parmi les positions suivantes : dans un assemblage 40, entre les crayons 46 périphériques de deux assemblages adjacents 40, ou encore entre les grilles 56 de deux assemblages adjacents 40.

Par simplification, la matrice K est, par exemple, une matrice diagonale à 3 lignes et 3 colonnes pour simuler l'écoulement suivant les 3 directions X, Y, Z. Par convention, les termes diagonaux de la matrice sont notés K$_{i,i}$, les autres termes K$_{i,j}$ de la matrice K étant nuls. En variante, la matrice K n'est pas une matrice diagonale et tous les termes de la matrice sont pris en compte.

Chaque terme diagonal K$_{i,i}$ vérifie l'équation suivante :

$$K_{i,i} = \frac{1}{2} \times \rho \times J_{i,i} \times V_i \qquad (10)$$

où $\rho$ est la masse volumique du fluide, $V_i$ est la composante selon la direction X, Y, Z correspondante de la vitesse du fluide, et $J_{i,i}$ est un coefficient de perte de charge par unité de longueur.

Par convention, chaque coefficient de perte de charge par unité de longueur est fonction d'un coefficient de perte de charge dit singulier associé à un phénomène de perte de charge locale et d'un coefficient de perte de charge dit régulier associé à un phénomène de perte de charge par frottement sur une paroi.

Lors de l'étape initiale 200, un coefficient de perte de charge transverse dans les assemblages 40 est déterminé en fonction du nombre de Reynolds transverse Re. Le coefficient de perte de charge transverse est associé à une perte de charge singulière et correspond, par convention, à une perte de charge locale selon la direction transversale perpendiculaire à la direction axiale de l'écoulement du fluide.

Le coefficient de perte de charge transverse est déterminé, pour une valeur d'un nombre de Reynolds transverse Re suivant la direction transversale X, Y, de préférence par comparaison de la valeur d'une grandeur, telle qu'une force hydraulique selon la direction transverse, calculée pour une partie de l'assemblage 40 à l'aide d'un premier modèle, avec la valeur de ladite grandeur calculée pour ladite partie de l'assemblage 40 à l'aide d'un second modèle, distinct du premier modèle.

Dans l'exemple de réalisation décrit, la force hydraulique selon la direction transversale est calculée avec le premier modèle, tel que le modèle semi-détaillé décrit précédemment pour le premier aspect, pour une valeur du nombre de Reynolds transverse Re, puis la force hydraulique selon la direction transversale est calculée avec le second modèle, tel que celui vérifiant l'équation (8), pour la même valeur du nombre de Reynolds transverse.

Lors du calcul à l'aide du second modèle, tous les coefficients de pertes de charge à l'exception du coefficient de perte de charge transverse sont fixés à une valeur prédéterminée, et la valeur du coefficient de perte de charge transverse déterminée pour ladite valeur du nombre de Reynolds transverse Re est alors la valeur pour laquelle la différence entre la grandeur calculée pour une partie de l'assemblage 40 à l'aide du premier modèle et ladite grandeur calculée pour la même partie d'assemblage à l'aide du second modèle est la plus faible.

Plusieurs valeurs du coefficient de perte de charge transverse sont alors déterminées pour une pluralité de comparaisons effectuées pour différentes valeurs du nombre de Reynolds transverse Re.

Dans l'exemple de réalisation décrit, des coefficients de perte de charge singuliers, notés Kb, sont déterminés lors de l'étape 200, les coefficients de perte de charge transverse étant sensiblement égaux aux coefficients de perte de charge singuliers divisés par une longueur caractéristique de l'écoulement dans l'assemblage 40.

Lors de l'étape suivante 210, la relation du coefficient de perte de charge transverse en fonction du nombre de Reynolds transverse Re est calculée par interpolation de la pluralité de valeurs du coefficient de perte de charge transverse déterminées lors de l'étape 200 pour la pluralité de comparaisons effectuées.

L'interpolation est une approximation mathématique, par exemple, par une fonction polynomiale, une fonction exponentielle, une fonction logarithmique, une fonction puissance...

En complément, au moins une première grille parmi les grilles 56 comprend en outre des moyens de mélange, non représentés, propres à générer un écoulement présentant des vitesses transverses à l'écoulement axial et au moins une deuxième grille parmi les grilles 56 ne comporte aucun moyen de mélange.

Une première relation du coefficient de perte de charge transverse en fonction du nombre de Reynolds transverse Re est alors calculée pour une première partie de l'assemblage 40 comportant la première grille.

Une deuxième relation du coefficient de perte de charge transverse en fonction du nombre de Reynolds Re est calculée pour une deuxième partie de l'assemblage 40 comportant la deuxième grille, cette deuxième relation étant calculée indépendamment de la première relation.

Lors de l'étape 220, un coefficient de perte de charge axiale dans le jeu entre les grilles 56 est déterminé en fonction de la dimension du jeu entre les grilles BP1 suivant la direction transversale. Le coefficient de perte de charge axiale dans le jeu entre les grilles 56 est associé à une perte de charge régulière et correspond à une perte de charge par frottement le long des assemblages 40, plus précisément le long des grilles 56 desdits assemblages 40, selon la direction axiale Z de l'écoulement du fluide.

De manière analogue, le coefficient de perte de charge axiale dans le jeu entre les grilles 56 est déterminé, pour une valeur de la dimension du jeu entre les grilles BP1, de préférence par comparaison d'une valeur d'une grandeur, telle qu'une force hydraulique selon la direction transversale, calculée pour une partie de l'assemblage 40 à l'aide du premier modèle, avec la valeur de ladite grandeur calculée pour ladite partie de l'assemblage 40 à l'aide du second modèle, distinct du premier modèle.

Dans l'exemple de réalisation décrit, la force hydraulique selon la direction transversale est calculée avec le premier modèle, tel que le modèle semi-détaillé, pour une valeur de la dimension du jeu BP1 entre les grilles 56, puis la force hydraulique selon la direction transversale est calculée avec le second modèle, tel que celui vérifiant l'équation (9), pour la même valeur de la dimension du jeu BP1.

Lors du calcul à l'aide du second modèle, tous les coefficients de pertes de charge à l'exception du coefficient de perte de charge axiale dans le jeu BP1 entre les grilles 56 sont fixés à une valeur prédéterminée, et la valeur du coefficient de perte de charge axiale dans le jeu BP1 entre les grilles 56 déterminée pour ladite valeur de la dimension du jeu BP1 est alors la valeur pour laquelle la différence entre la grandeur calculée pour une partie de l'assemblage 40 à l'aide du premier modèle et ladite grandeur calculée pour la même partie d'assemblage 40 à l'aide du second modèle est la plus faible.

Plusieurs valeurs du coefficient de perte de charge axiale dans le jeu BP1 entre les grilles 56 sont alors déterminées pour une pluralité de comparaisons effectuées pour différentes valeurs de la dimension du jeu BP1.

Dans l'exemple de réalisation décrit, des coefficients de frottement le long de l'assemblage 40 suivant la direction axiale, notés $\lambda_{bp}^{G}$, sont déterminés lors de l'étape 220, les coefficients de perte de charge axiale dans le jeu entre les grilles étant sensiblement égaux aux coefficients de frottement $\lambda_{bp}^{G}$ divisés par la longueur hydraulique caractéristique entre deux assemblages 40 successifs.

Lors de l'étape suivante 230, la relation du coefficient de perte de charge axiale dans le jeu entre les grilles en fonction de la dimension du jeu entre les grilles BP1 est calculée par interpolation de la pluralité de valeurs du coefficient de perte de charge axiale dans le jeu entre les grilles, déterminées lors de l'étape 220 pour la pluralité de comparaisons effectuées.

Comme précédemment l'interpolation est, par exemple, réalisée par une fonction polynomiale, une fonction exponentielle, une fonction logarithmique, une fonction puissance...

En complément, les coefficients de perte de charge autres que le coefficient de perte de charge transverse dans les assemblages 40 et le coefficient de perte de charge axiale dans le jeu BP1 entre les grilles 56 présentent chacun une valeur prédéterminée, par exemple constante. Les valeurs des autres coefficients de pertes de charge sont prédéterminées par exemple expérimentalement ou bien à l'aide de calculs de mécanique des fluides numériques, réalisés par ailleurs. Par exemple le coefficient de perte de charge axial dans le jeu entre deux crayons 46 périphériques de deux assemblages 40 adjacents est déterminé à l'aide du jeu BP2 entre les crayons 46 périphériques respectifs de deux assemblages 40 adjacents.

Lors de l'étape suivante 240, la ou les composantes d'une grandeur parmi la vitesse V du fluide et la pression P du fluide, sont alors calculées à partir de la ou des composantes de l'autre grandeur parmi la vitesse V du fluide et la pression P du fluide, et selon l'équation (9) précédente.

Le procédé de simulation selon le deuxième aspect de l'invention ne nécessite pas une puissance de calcul trop importante de par la simplification de ce modèle poreux en comparaison notamment avec le modèle détaillé, ou encore le modèle semi-détaillé décrit précédemment pour le premier aspect de l'invention.

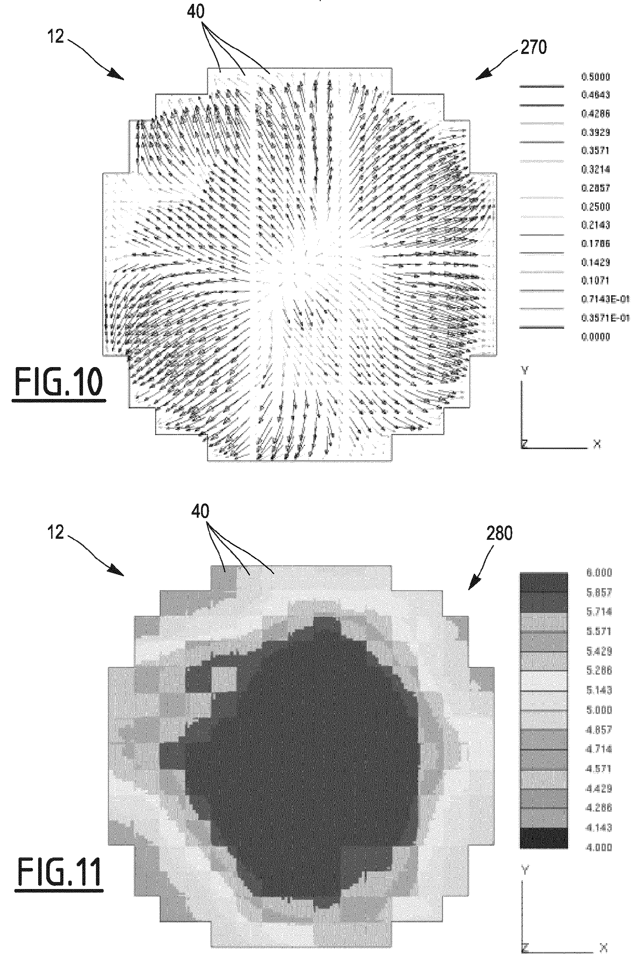

Le procédé de simulation selon le deuxième aspect de l'invention permet en outre d'offrir une meilleure modélisation de l'écoulement, comme le montre les figures 10 et 11, représentant une vue 270 de la vitesse transverse, et respectivement une vue 280 de la vitesse axiale, du fluide à l'intérieur du coeur 12 et en aval de la première grille 56, ces vitesses étant calculées à l'aide du procédé de simulation selon le deuxième aspect de l'invention.

Sur les vues 270 et 280, les différentes valeurs de vitesse sont représentées en pourcentage de variation par rapport à une valeur nominale de la vitesse. Les vues 270 et 280 montrent alors une bonne précision et une bonne discrimination entre les valeurs de la vitesse calculées selon l'assemblage 40 concerné.

On conçoit ainsi que le procédé de simulation selon le deuxième aspect offre une meilleure modélisation de l'écoulement, tout en ne nécessitant pas une puissance de calcul trop importante. L'homme du métier observera également que le procédé de simulation selon le deuxième aspect est indépendant du procédé de simulation selon le premier aspect, puisqu'il est susceptible d'être mis en oeuvre indépendamment du procédé de simulation selon le premier aspect.

En complément, les premier et deuxième aspects sont combinés afin d'améliorer encore la modélisation de l'écoulement, tout en limitant la puissance de calcul nécessaire. A cet effet, les étapes 120 et 130 du procédé de simulation selon le premier aspect sont effectuées en mettant en oeuvre les étapes 200 à 240 du procédé de simulation selon le deuxième aspect, c'est-à-dire en utilisant le modèle poreux particulier.

Pour les autres types de réacteurs disposant d'un fluide de refroidissement autre que l'eau pressurisée, notamment les réacteurs utilisant un gaz ou un liquide de refroidissement (eau légère, eau lourde, sel ou métal fondu), mais aussi pour les réacteurs à eau pressurisée, la connaissance fine des écoulements est utilisée pour évaluer par exemple le comportement vibratoire des assemblages 40 et de leurs composants.

Le procédé de simulation selon le premier aspect, selon le deuxième aspect ou encore selon les premier et deuxième aspects combinés permet notamment d'améliorer le calcul de la déformation mécanique des assemblages 40 du coeur 12.

Comme connu en soi, la déformation mécanique du ou de chaque assemblage 40 est fonction entre autres de l'effort hydraulique latéral selon la direction transversale X, Y produit par l'écoulement d'un fluide à l'intérieur de la cuve 11, c'est à dire est fonction des composantes de la vitesse V et de la pression P du fluide calculées à l'aide du procédé de simulation. L'effort hydraulique latéral selon la direction transversale X, Y est, par exemple, appliqué à un modèle structural d'un système mécanique présentant éventuellement des non-linéarités, afin de calculer la réponse dudit système à un chargement appliqué sous forme d'efforts ou de déplacements statiques ou dynamiques. Dans l'exemple de réalisation décrit, les déformations des assemblages 40 sont calculées par application des efforts hydrauliques latéraux calculés à l'aide du procédé de simulation à un modèle du coeur 12 de type « poutres » à deux et de préférence à trois dimensions.

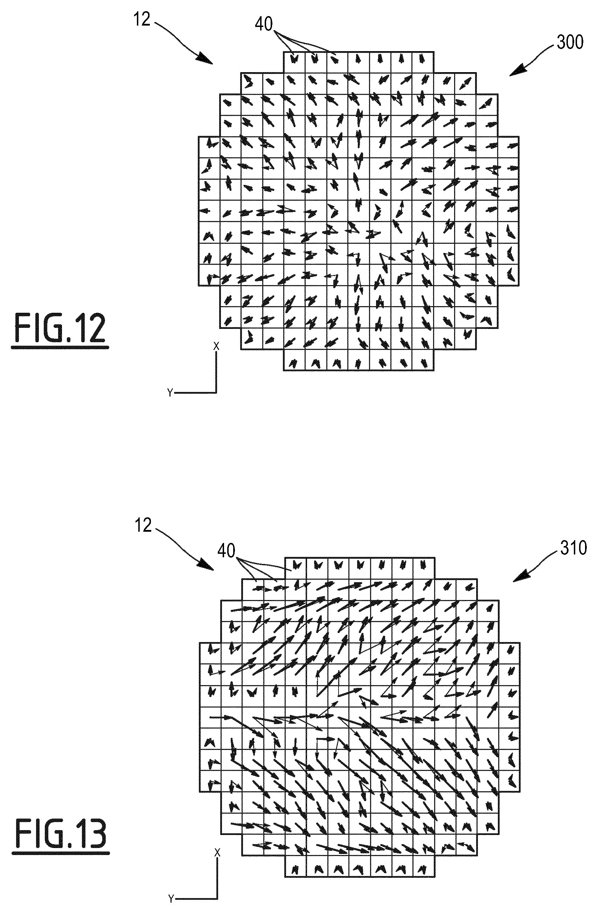

Les déformations mécaniques des assemblages 40 calculées à l'aide du procédé selon l'invention de calcul de la déformation sont représentées sur les figures 12 et 13. La vue 300 représente schématiquement en vue de dessus des déformations des assemblages obtenues, d'une part, à l'aide d'un procédé de calcul de déformation mettant en oeuvre les premier et deuxième aspects du procédé de simulation selon l'invention, et d'autre part, à l'aide de mesures effectuées, pour la troisième grille 56 à partir de la plaque inférieure 41 A du coeur 12. La vue 310 est une vue analogue à la vue 300, mais pour la huitième grille 56 à partir de ladite plaque inférieure 41 A.

Sur les vues 300 et 310, les flèches en trait épais correspondent aux déformations des assemblages 40 calculées à l'aide du procédé de calcul selon l'invention, alors que les flèches en trait fin correspondent à des valeurs mesurées desdites déformations. La comparaison des vues 300 et 310 montre que, contrairement à l'état de la technique, les orientations des déformations obtenues par simulation et mesurées sont globalement en accord. Les différences sont relativement faibles entre les valeurs obtenues par simulation et les valeurs mesurées. L'homme du métier observera que même si les tailles des flèches en trait épais et en trait fin sont pour certains assemblages 40 assez différentes, il n'était avant pas possible de calculer l'orientation correcte des déformations des assemblages 40 à partir de simulations de l'écoulement du fluide dans le coeur 12 réalisées à l'aide des modèles de l'état de l'art.

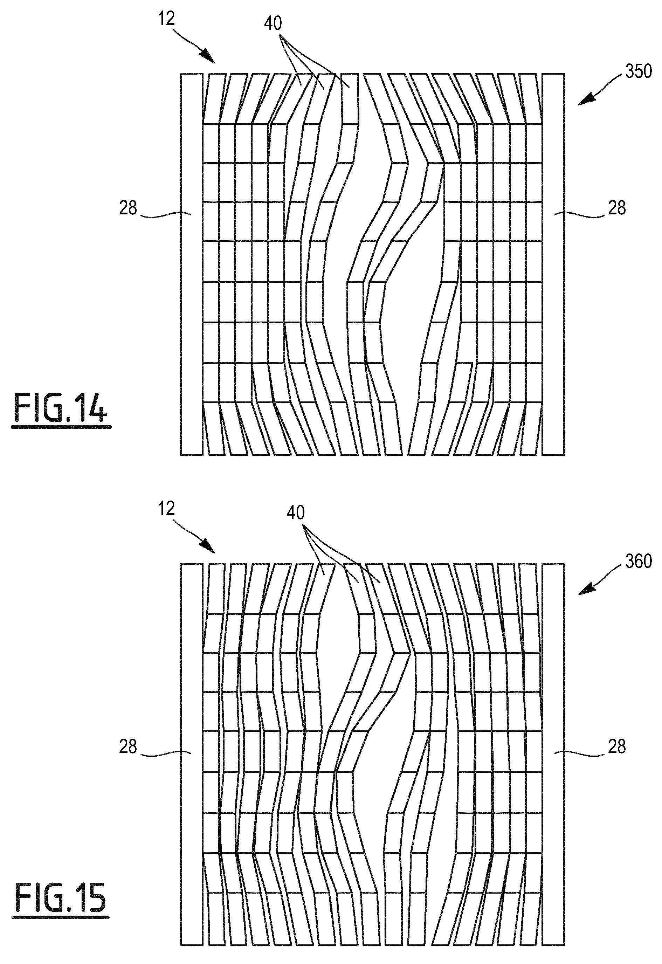

Sur les figures 14 et 15, une vue 350 représente, en vue de côté, les déformations des assemblages 40 obtenues pour une rangée d'assemblages du coeur 12 à l'aide du procédé de calcul de déformation mettant en oeuvre les premier et deuxième aspects du procédé de simulation selon l'invention, et une vue 360 représente, toujours en vue de côté, les déformations des assemblages 40 obtenues à l'aide de mesures effectuées, pour la même rangée d'assemblages du coeur 12.

La comparaison des figures 14 et 15 montre que les différences sont relativement faibles entre les valeurs obtenues par simulation et les valeurs mesurées. L'homme du métier observera que même si les formes des déformations sont pour certains assemblages 40 un peu différentes, il n'était avant pas possible de déterminer la déformation des assemblages 40 à partir de simulation de l'écoulement du fluide dans le coeur 12 à l'aide des modèles de l'état de l'art.

En complément, à un instant donné, l'état de déformation des assemblages 40 présents dans la cuve 11 calculé à l'aide du procédé de calcul de la déformation mécanique des assemblages est réintroduit dans le modèle de simulation de l'écoulement fluide au sein de la cuve 11 en prenant en compte les nouvelles déformations des assemblages 40, c'est-à-dire l'évolution des jeux BP1 entre les grilles 56 respectives des assemblages 40 et des jeux BP2 entre les crayons périphériques 46 respectifs des assemblages 40. Le procédé de simulation de l'écoulement du fluide calcule ensuite des efforts hydrauliques, notamment des efforts hydrauliques latéraux selon la direction transverse X, Y, pour les assemblages 40 du coeur 12. Ces efforts hydrauliques sont pris en compte dans le modèle mécanique du coeur 12, et par un calcul mécanique, on en déduit les déformations résultantes à l'instant suivant. De manière itérative, ces déformations sont ensuite réintroduites dans le modèle hydraulique.

Le chaînage itératif du modèle hydraulique et du modèle mécanique permet d'améliorer encore la simulation de l'évolution des déformations des assemblages 40 par interaction fluide-structure.

On conçoit ainsi que le procédé de simulation de l'écoulement du fluide à l'intérieur de la cuve 11 du réacteur 10 selon le premier aspect et/ou selon le deuxième aspect offre une meilleure modélisation de l'écoulement, notamment pour améliorer le calcul de la déformation mécanique des assemblages 40 du coeur 12, tout en ne nécessitant pas une puissance de calcul trop importante.

**Revendications**

1. Procédé de simulation de l'écoulement d'un fluide à l'intérieur d'une cuve (11) d'un réacteur nucléaire (1 0) en utilisant un ordinateur programmé de façon appropriée, le réacteur nucléaire (10) comprenant la cuve (11) et un coeur (12) disposé à l'intérieur de ladite cuve (11), le coeur (12) comportant des assemblages (40) de combustible nucléaire, chaque assemblage (40) s'étendant suivant une direction axiale (Z) et comportant des crayons (46) de combustible nucléaire et au moins une grille (56) de maintien des crayons, chaque assemblage (40) étant espacé d'un autre assemblage (40) par un jeu (BP1) entre les grilles (56) correspondantes suivant une direction transversale (X, Y) perpendiculaire à la direction axiale (Z), le fluide étant propre à circuler à l'intérieur du coeur (12),

   le procédé comprenant les étapes suivantes :

     - i) déterminer (200, 210, 220, 230) des coefficients de pertes de charge dans le coeur (12),
     - ii) calculer (240) la pression (P) du fluide et la ou les composantes de la vitesse (V) du fluide dans le coeur,

et à l'aide de l'équation suivante :

$$\nabla P = -K \times V$$

où $\nabla$ est l'opérateur nabla de dérivation spatiale du premier ordre,
P est la composante de la pression du fluide,
K est une matrice comportant les coefficients de pertes de charge déterminés lors de l'étape i), et
V est un vecteur comportant la ou les composantes de la vitesse du fluide,

le procédé étant **caractérisé en ce que**, lors de l'étape i), un coefficient de perte de charge transverse dans les assemblages (40) est déterminé en fonction d'un nombre de Reynolds transverse (Re) suivant la direction transversale (X, Y), et un coefficient de perte de charge axiale dans le jeu (BP1) est déterminé en fonction de la dimension du jeu (BP1) suivant la direction transversale (X, Y).

2. Procédé selon la revendication 1, dans lequel, lors de l'étape i), le coefficient de perte de charge transverse est déterminé, pour une valeur du nombre de Reynolds transverse (Re), par comparaison d'une grandeur, telle qu'une force hydraulique selon la direction transversale (X, Y), calculée pour une partie de l'assemblage (40) à l'aide d'un premier modèle, avec ladite grandeur calculée pour ladite partie de l'assemblage (40) à l'aide d'un second modèle, distinct du premier modèle.

3. Procédé selon la revendication 2, dans lequel la relation du coefficient de perte de charge transverse en fonction du nombre de Reynolds transverse (Re) est calculée par interpolation de plusieurs valeurs du coefficient de perte de charge transverse déterminées pour une pluralité de comparaisons effectuées.

4. Procédé selon la revendication 2 ou 3, dans laquelle au moins une première grille parmi les grilles (56) comprend en outre des moyens additionnels de mélange propres à générer un écoulement présentant au moins une vitesse transverse suivant la direction transversale (X, Y), et au moins une deuxième grille parmi les grilles (56) ne comporte pas de moyen additionnel de mélange, et
dans lequel une première relation du coefficient de perte de charge transverse en fonction du nombre de Reynolds transverse (Re) est calculée pour une première partie de l'assemblage (40) comportant la première grille, et une deuxième relation du coefficient de perte de charge transverse en fonction du nombre de Reynolds transverse (Re) est calculée pour une deuxième partie de l'assemblage (40) comportant la deuxième grille.

5. Procédé selon l'une quelconque des revendications précédentes, dans lequel, lors de l'étape i), le coefficient de perte de charge axiale dans le jeu (BP1) est déterminé, pour une valeur de la dimension du jeu (BP1), par comparaison d'une grandeur, telle qu'une force hydraulique selon la direction transverse, calculée pour une partie de l'assemblage (40) à l'aide d'un premier modèle, avec ladite grandeur calculée pour ladite partie de l'assemblage (40) à l'aide d'un second modèle, distinct du premier modèle.

6. Procédé selon la revendication 5, dans lequel la relation du coefficient de perte de charge axiale dans le jeu (BP1) en fonction de ladite dimension du jeu (BP1) est calculée par interpolation de plusieurs valeurs du coefficient de perte de charge axiale dans le jeu (BP1) entre les grilles (56), déterminées pour une pluralité de comparaisons effectuées.

7. Procédé selon l'une quelconque des revendications précédentes, dans lequel lors de l'étape i), les coefficients de perte de charge autres que le coefficient de perte de charge transverse dans les assemblages (40) et le coefficient de perte de charge axiale dans le jeu (BP1) entre les grilles (56) présentent chacun une valeur prédéterminée, de préférence une valeur constante prédéterminée.

8. Procédé de simulation utilisant un procédé selon l'une quelconque des revendications précédentes, dans lequel la cuve (11) comporte un orifice (39A) d'entrée du fluide et un orifice (39B) de sortie du fluide, le coeur (12) comporte une plaque inférieure (41 A) et une plaque supérieure (41 B), les assemblages (40) s'étendant entre les plaques inférieure (41 A) et supérieure (41 B), le coeur (12) présentant un volume ($Vol_C$) délimité par des première et seconde interfaces suivant la direction axiale (Z), les première et seconde interfaces correspondant respectivement aux plaques inférieure et supérieure (41 A, 41 B), et
dans lequel le procédé comprend en outre les étapes suivantes :

- déterminer (100) au moins un volume additionnel ($Vol_{PI}$, $Vol_{PS}$) à l'intérieur de la cuve (11), le volume additionnel ($Vol_{PI}$, $Vol_{PS}$) étant externe au volume du coeur ($Vol_C$) et situé à une extrémité de celui-ci suivant la direction axiale (Z), le volume additionnel ($Vol_{PI}$, $Vol_{PS}$) étant délimité par deux interfaces suivant la direction axiale (Z), une des deux interfaces du volume additionnel ($Vol_{PI}$, $Vol_{PS}$) étant la première interface ou la seconde interface,

et selon l'une quelconque de revendications précédentes :

- calculer (110, 140), pour le volume additionnel ($Vol_{PI}$, $Vol_{PS}$) et à l'aide d'équations de bilan de la masse du fluide, de bilan de la quantité de mouvement du fluide et de bilan de l'énergie du fluide, la pression (P) du fluide et la ou les composantes de la vitesse (V) du fluide, à partir d'une valeur initiale de la vitesse (V) ou de la pression (P) en l'une des interfaces du volume additionnel ($Vol_{PI}$, $Vol_{PS}$) et d'une valeur initiale de la vitesse (V) ou de la pression (P) en l'autre des interfaces du volume additionnel ($Vol_{PI}$, $Vol_{PS}$),
- calculer (120, 130), pour le volume du coeur ($Vol_C$), la pression (P) du fluide et la ou les composantes de la vitesse (V) du fluide, à partir d'une valeur initiale de la vitesse (V) ou de la pression (P) du fluide en la première interface et d'une valeur initiale de la vitesse (V) ou de la pression (P) du fluide en la seconde interface et selon l'étape ii), et

le calcul de la pression (P) du fluide et de la ou des composantes de la vitesse (V) du fluide est d'abord effectué pour un premier volume parmi le volume additionnel ($Vol_{PI}$, $Vol_{PS}$) et le volume du coeur ($Vol_C$) et notamment en l'interface parmi les première et seconde interfaces qui est commune au volume additionnel ($Vol_{PI}$, $Vol_{PS}$) et au volume du coeur ($Vol_C$),
puis le calcul de la pression (P) du fluide et de la ou les composantes de la vitesse (V) du fluide est effectué pour le second volume parmi le volume additionnel ($Vol_{PI}$, $Vol_{PS}$) et le volume du coeur ($Vol_C$), la valeur initiale de la vitesse (V) ou de la pression (P) en l'interface commune au volume additionnel ($Vol_{PI}$, $Vol_{PS}$) et au volume du coeur ($Vol_C$) et pour cette étape de calcul associée au second volume étant alors la valeur de la grandeur correspondante parmi la vitesse (V) et la pression (P) calculée précédemment en ladite interface pour le premier volume.

9. Procédé selon la revendication 8, dans lequel les équations de bilan de la masse, de bilan de la quantité de mouvement et de bilan de l'énergie sont respectivement les suivantes :

$$\frac{\partial \rho}{\partial t} + \nabla(\rho V) = S_m$$

$$\frac{\partial(\rho V)}{\partial t} + \nabla \cdot (\rho V \otimes V) = -\nabla P + \nabla \cdot \tau + \rho F + S_i$$

$$\frac{\partial(\rho E)}{\partial t} + \nabla \cdot \left[(\rho E + P) \times V\right] = \nabla \cdot (\tau \cdot V) + \rho F \cdot V - \nabla \cdot Q + R + S_e$$

où $\nabla$ est l'opérateur nabla de dérivation spatiale du premier ordre, $P$ est la composante de la pression du fluide, $V$ est un vecteur comportant la ou les composantes de la vitesse du fluide, $\rho$ est la masse volumique du fluide, $t$ est le temps, $\tau$ est le tenseur des contraintes visqueuses, $F$ est un vecteur comportant la ou les composantes de la résultante des forces massiques s'exerçant dans le fluide, $E$ est une énergie totale par unité de masse, $Q$ est un vecteur comportant la ou les composantes du flux de chaleur perdue par conduction thermique, $R$ est la perte de chaleur volumique due au rayonnement, $S_m$ est la source de masse, $S_i$ est la source de quantité de mouvement, et $S_e$ est la source d'énergie.

10. Procédé selon la revendication 8 ou 9, dans lequel

- l'étape de calcul pour le premier volume est réitérée avec, comme valeur initiale de la vitesse (V) ou de la pression (P) en ladite interface commune et pour cette réitération de l'étape de calcul associée au premier volume, la valeur de la grandeur correspondante parmi la vitesse (V) et la pression (P) calculée lors de l'étape effectuée précédemment en ladite interface pour le second volume, et
- l'étape de calcul pour le second volume est réitérée avec, comme valeur initiale de la vitesse (V) ou de la pression (P) en ladite interface commune et pour cette réitération de l'étape de calcul associée au second volume, la valeur de la grandeur correspondante parmi la vitesse (V) et la pression (P) calculée précédemment en ladite interface pour le premier volume lors de la réitération.

11. Procédé selon l'une quelconque des revendications 8 à 10, dans lequel deux volumes additionnels (Vol$_{PI}$, Vol$_{PS}$) sont déterminés lors de l'étape de détermination (100) : un volume additionnel amont (Vol$_{PI}$) situé en amont du volume du coeur (Vol$_C$) suivant le sens de circulation du fluide et un volume additionnel aval (Vol$_{PS}$) situé en aval du volume du coeur (Vol$_C$) suivant le sens de circulation du fluide, la première interface du volume du coeur (Vol$_C$) étant commune avec le volume additionnel amont (Vol$_{PI}$) et la seconde interface du volume du coeur (Vol$_C$) étant commune avec le volume additionnel aval (Vol$_{PS}$), et

dans lequel le calcul de la pression (P) du fluide et de la ou les composantes de la vitesse (V) du fluide est effectué :

a) en la première interface, d'abord (110 ; 120) pour un premier volume parmi le volume additionnel amont (Vol$_{PI}$) et le volume du coeur (Vol$_C$), puis (120 ; 110) pour un deuxième volume parmi le volume additionnel amont (Vol$_{PI}$) et le volume du coeur (Vol$_C$), la valeur initiale de la vitesse (V) ou de la pression (P) en la première interface pour l'étape de calcul associée au deuxième volume étant la grandeur correspondante parmi la vitesse (V) et la pression (P) calculée précédemment en la première interface lors l'étape de calcul associée au premier volume, et

b) en la seconde interface, d'abord (130 ; 140) pour un troisième volume parmi le volume additionnel aval (Vol$_{PS}$) et le volume du coeur (Vol$_C$), puis (140 ; 130) pour un quatrième volume parmi le volume additionnel aval (Vol$_{PS}$) et le volume du coeur (Vol$_C$), la valeur initiale de la vitesse (V) ou de la pression (P) en la seconde interface pour l'étape de calcul associée au quatrième volume étant la grandeur correspondante parmi la vitesse (V) et la pression (P) calculée précédemment en la seconde interface lors l'étape de calcul associée au troisième volume.

12. Produit programme d'ordinateur comportant des instructions logicielles qui, lorsqu'elles sont mises en oeuvre par un ordinateur, met en oeuvre le procédé selon l'une quelconque des revendications précédentes.

13. Procédé de calcul d'une déformation mécanique d'au moins un assemblage (40) d'un coeur (12) d'un réacteur nucléaire (10), le réacteur nucléaire (10) comprenant une cuve (11) et le coeur (12) disposé à l'intérieur de la cuve (11), la déformation mécanique du ou de chaque assemblage (40) étant fonction de l'écoulement d'un fluide à l'intérieur de la cuve (11),
le procédé étant **caractérisé en ce que** l'écoulement du fluide est simulé avec un procédé de simulation selon l'une quelconque des revendications 1 à 11.

14. Produit programme d'ordinateur comportant des instructions logicielles qui, lorsqu'elles sont mises en oeuvre par un ordinateur, met en oeuvre le procédé selon la revendication 13.

**Patentansprüche**

1. Verfahren zur Simulation der Strömung eines Mediums im Innern eines Behälters (11) eines Kernreaktors (10) bei Verwendung eines entsprechend programmierten Rechners, wobei der Kernreaktor (10) den Behälter (11) und einen Kern (12) umfasst, der im Innern des Behälters (11) angeordnet ist, wobei der Kern (12) Kernbrennstoffbündel (40) aufweist, wobei sich jedes Bündel (40) gemäß einer axialen Richtung (Z) erstreckt und Kernbrennstäbe (46) und mindestens ein Haltegitter (56) der Stäbe aufweist, wobei jedes Bündel (40) von einem anderen Bündel (40) durch ein Spiel (BP1) zwischen den entsprechenden Gittern (56) gemäß einer transversalen Richtung (X, Y), die senkrecht zur axialen Richtung (Z) ist, beabstandet ist, wobei das Medium imstande ist, im Innern des Kerns (12) zu zirkulieren,
wobei das Verfahren die folgenden Schritte umfasst:

- i) Bestimmen (200, 210, 220, 230) der Lastverlustkoeffizienten im Kern (12),
- ii) Berechnen (240) des Drucks (P) des Mediums und der Komponente oder Komponenten der Geschwindigkeit (V) des Mediums im Kern und mit Hilfe der folgenden Gleichung:

$$\nabla P = -K \, x \, V$$

wobei ∇ der Nabla-Operator der räumlichen Ableitung der ersten Ordnung ist,

P die Komponente des Drucks des Mediums ist,

K eine Matrix ist, die die in Schritt i) bestimmten Lastverlustkoeffizienten aufweist, und

V ein Vektor ist, der die Komponente oder Komponenten der Geschwindigkeit des Mediums aufweist,

wobei das Verfahren **dadurch gekennzeichnet ist, dass** in Schritt i) ein transverser Lastverlustkoeffizient in den Bündeln (40) in Abhängigkeit von einer transversen Reynolds-Zahl (Re) gemäß der transversalen Richtung (X, Y) bestimmt wird und ein axialer Lastverlustkoeffizient im Spiel (BP1) in Abhängigkeit von der Größe des Spiels (BP1) gemäß der transversalen Richtung (X, Y) bestimmt wird.

2. Verfahren nach Anspruch 1, wobei in Schritt i) der transverse Lastverlustkoeffizient für einen Wert der transversen Reynolds-Zahl (Re) durch Vergleichen einer Größe wie eine hydraulische Kraft gemäß der transversalen Richtung (X, Y), berechnet für einen Teil des Bündels (40) mit Hilfe eines ersten Modells, mit der für den Teil des Bündels (40) mit Hilfe eines zweiten Modells, das sich vom ersten Modell unterscheidet, berechneten Größe bestimmt wird.

3. Verfahren nach Anspruch 2, wobei die Relation des transversen Lastverlustkoeffizienten in Abhängigkeit von der transversen Reynolds-Zahl (Re) durch Interpolieren mehrerer Werte des transversen Lastverlustkoeffizienten, die für eine Vielzahl durchgeführter Vergleiche bestimmt wurden, berechnet wird.

4. Verfahren nach Anspruch 2 oder 3, wobei mindestens ein erstes Gitter von den Gittern (56) ferner zusätzliche Mischmittel umfasst, die imstande sind, eine Strömung zu erzeugen, die mindestens eine gemäß der transversalen Richtung (X, Y) transverse Geschwindigkeit aufweist und mindestens ein zweites Gitter von den Gittern (56), das keine zusätzlichen Mischmittel aufweist, und

wobei eine erste Relation des transversen Lastverlustkoeffizienten in Abhängigkeit von der transversen Reynolds-Zahl (Re) für einen ersten Teil des Bündels (40) berechnet wird, der das erste Gitter aufweist, und eine zweite Relation des transversen Lastverlustkoeffizienten in Abhängigkeit von der transversen Reynolds-Zahl (Re) für einen zweiten Teil des Bündels (40) berechnet wird, der das zweite Gitter aufweist.

5. Verfahren nach einem der vorangehenden Ansprüche, wobei in Schritt i) der axiale Lastverlustkoeffizient im Spiel (BP1) für einen Wert der Größe des Spiels (BP1) durch Vergleichen einer Größe wie eine hydraulische Kraft gemäß der transversen Richtung, berechnet für einen Teil des Bündels (40) mit Hilfe eines ersten Modells, mit der für den Teil des Bündels (40) mit Hilfe eines zweiten Modells, das sich vom ersten Modell unterscheidet, berechneten Größe bestimmt wird.

6. Verfahren nach Anspruch 5, wobei die Relation des axialen Lastverlustkoeffizienten im Spiel (BP1) in Abhängigkeit von der Größe des Spiels (BP1) durch Interpolieren mehrerer Werte des axialen Lastverlustkoeffizienten im Spiel (BP1) zwischen den Gittern (56), die für eine Vielzahl durchgeführter Vergleiche bestimmt wurden, berechnet wird.

7. Verfahren nach einem der vorangehenden Ansprüche, wobei in Schritt i) die Lastverlustkoeffizienten, die kein transverser Lastverlustkoeffizient in den Bündeln (40) sind, und der axiale Lastverlustkoeffizient im Spiel (BP1) zwischen den Gittern (56) jeweils einen vorbestimmten Wert, vorzugsweise einen vorbestimmten konstanten Wert, aufweisen.

8. Simulationsverfahren, das ein Verfahren nach einem der vorangehenden Ansprüche verwendet, wobei der Behälter (11) eine Einlassöffnung (39A) des Mediums und eine Auslassöffnung (39B) des Mediums aufweist, wobei der Kern (12) eine untere Platte (41 A) und eine obere Platte (41 B) aufweist, wobei sich die Bündel (40) zwischen der unteren Platte (41 A) und der oberen Platte (41 B) erstrecken, wobei der Kern (12) ein Volumen ($Vol_c$) aufweist, das von einer ersten Grenzfläche und einer zweiten Grenzfläche gemäß der axialen Richtung (Z) begrenzt ist, wobei die erste Grenzfläche und die zweite Grenzfläche jeweils der unteren Platte und der oberen Platte (41 A, 41 B) entsprechen, und

wobei das Verfahren ferner die folgenden Schritte umfasst:

- Bestimmen (100) mindestens eines zusätzlichen Volumens ($Vol_{PI}$, $Vol_{PS}$) im Innern des Behälters (11), wobei das zusätzliche Volumen ($Vol_{PI}$, $Vol_{PS}$) extern zum Volumen des Kerns ($Vol_c$) ist und sich an einem Ende desselben gemäß der axialen Richtung (Z) befindet, wobei das zusätzliche Volumen ($Vol_{PI}$, $Vol_{PS}$) von zwei Grenzflächen gemäß der axialen Richtung (Z) begrenzt ist, wobei eine der zwei Grenzflächen des zusätzlichen Volumens ($Vol_{PI}$, $Vol_{PS}$) die erste Grenzfläche oder die zweite Grenzfläche ist,

und nach einem der vorangehenden Ansprüche:

- Berechnen (110, 140), für das zusätzliche Volumen (Vol$_{PI}$, Vol$_{PS}$) und mit Hilfe von Gleichungen der Massenbilanz des Mediums, der Bewegungsmengenbilanz des Mediums und der Energiebilanz des Mediums, des Drucks (P) des Mediums und der Komponente oder Komponenten der Geschwindigkeit (V) des Mediums mit Hilfe eines Initialwerts der Geschwindigkeit (V) oder des Drucks (P) einer der Grenzflächen des zusätzlichen Volumens (Vol$_{PI}$, Vol$_{PS}$) und eines Initialwerts der Geschwindigkeit (V) oder des Drucks (P) in der anderen der Grenzfläche des zusätzlichen Volumens (Vol$_{PI}$, Vol$_{PS}$),
- Berechnen (120, 130), für das Volumen des Kerns (Vol$_c$), des Drucks (P) des Mediums und der Komponente oder Komponenten der Geschwindigkeit (V) des Mediums mit Hilfe eines Initialwerts der Geschwindigkeit (V) oder des Drucks (P) des Mediums in der ersten Grenzfläche und eines Initialwerts der Geschwindigkeit (V) oder des Drucks (P) des Mediums in der zweiten Grenzfläche und gemäß Schritt ii), und

wobei die Berechnung des Drucks (P) des Mediums und der Komponente oder Komponenten der Geschwindigkeit (V) des Mediums zunächst für ein erstes Volumen aus dem zusätzlichen Volumen (Vol$_{PI}$, Vol$_{PS}$) und dem Volumen des Kerns (Vol$_c$) und vor allem in der Grenzfläche aus der ersten und zweiten Grenzfläche, die dem zusätzlichen Volumen (Vol$_{PI}$, Vol$_{PS}$) und dem Volumen des Kerns (Vol$_c$) gemeinsam ist, durchgeführt wird,
wobei danach die Berechnung des Drucks (P) des Mediums und der Komponente oder Komponenten der Geschwindigkeit (V) des Mediums für das zweite Volumen aus dem zusätzlichen Volumen (Vol$_{PI}$, Vol$_{PS}$) und dem Volumen des Kerns (Vol$_c$) durchgeführt wird, wobei der Initialwert der Geschwindigkeit (V) oder des Drucks (P) in der Grenzfläche, die dem zusätzlichen Volumen (Vol$_{PI}$, Vol$_{PS}$) und dem Volumen des Kerns (Vol$_c$) gemeinsam ist und für diesen Berechnungsschritt dem zweiten Volumen zugeordnet ist, dann der Wert der entsprechenden Größe aus Geschwindigkeit (V) und Druck (P) ist, der zuvor in der Grenzfläche für das erste Volumen berechnet wurde.

9. Verfahren nach Anspruch 8, wobei die Gleichungen der Massenbilanz, der Bewegungsmengenbilanz und der Energiebilanz jeweils die folgenden sind:

$$\frac{\partial \rho}{\partial t} + \nabla(\rho V) = S_m$$

$$\frac{\partial(\rho V)}{\partial t} + \nabla \cdot (\rho V \otimes V) = -\nabla P + \nabla \cdot \tau + \rho F + S_i$$

$$\frac{\partial(\rho E)}{\partial t} + \nabla \cdot [(\rho E + P) \times V)] = \nabla \cdot (\tau \cdot V) + \rho F \cdot V - \nabla \cdot Q + R + S_e$$

wobei $\nabla$ der Nabla-Operator der räumlichen Ableitung der ersten Ordnung ist, *P* die Komponente des Drucks des Mediums ist, *V* ein Vektor ist, der die Komponente oder Komponenten der Geschwindigkeit des Mediums aufweist, p die Volumenmasse des Mediums ist, *t* die Zeit ist, $\tau$ der Tensor der viskosen Spannungen ist, *F* ein Vektor ist, der die Komponente oder Komponenten der Resultierenden der in dem Medium wirkenden Massenkräfte ist, *E* eine Gesamtenergie je Masseneinheit ist, *Q* ein Vektor ist, der die Komponente oder Komponenten des Stroms der durch Wärmeleitung verlorenen Wärme aufweist, *R* der volumenmäßige Wärmeverlust aufgrund von Strahlung ist, $S_m$ die Massenquelle ist, $S_i$ die Quelle der Bewegungsmenge ist und $S_e$ die Energiequelle ist.

10. Verfahren nach Anspruch 8 oder 9, wobei

- der Berechnungsschritt für das erste Volumen mit als Initialwert der Geschwindigkeit (V) oder des Drucks (P) in der gemeinsamen Grenzfläche und für diese Wiederholung des dem ersten Volumen zugeordneten Berechnungsschritts dem Wert der entsprechenden Größe aus Geschwindigkeit (V) und Druck (P), der in dem Schritt berechnet wurde, der zuvor in der Grenzfläche für das zweite Volumen durchgeführt wurde, wiederholt wird, und
- der Berechnungsschritt für das zweite Volumen mit als Initialwert der Geschwindigkeit (V) oder des Drucks (P) in der gemeinsamen Grenzfläche und für diese Wiederholung des dem zweiten Volumen zugeordneten Berechnungsschritts dem Wert der entsprechenden Größe aus Geschwindigkeit (V) und Druck (P), der zuvor in der Grenzfläche für das erste Volumen durchgeführt wurde, wiederholt wird.

**11.** Verfahren nach einem der Ansprüche 8 bis 10, wobei zwei zusätzliche Volumen (Vol$_{PI}$, Vol$_{PS}$) im Bestimmungsschritt (100) bestimmt werden: ein zusätzliches oberstromiges Volumen (Vol$_{PI}$), das sich gemäß der Zirkulationsrichtung des Mediums oberstromig zum Volumen des Kerns (Vol$_C$) befindet, und ein zusätzliches unterstromiges Volumen (Vol$_{PS}$), das sich gemäß der Zirkulationsrichtung des Mediums unterstromig zum Volumen des Kerns (Vol$_C$) befindet, wobei die erste Grenzfläche des Volumens des Kerns (Vol$_C$) mit dem zusätzlichen oberstromigen Volumen (Vol$_{PI}$) gemeinsam ist und die zweite Grenzfläche des Volumen des Kerns (Vol$_C$) mit dem zusätzlichen unterstromigen Volumen (Vol$_{PS}$) gemeinsam ist, und
wobei die Berechnung des Drucks (P) des Mediums und der Komponente oder Komponenten der Geschwindigkeit (V) des Mediums durchgeführt wird:

a) in der ersten Grenzfläche zunächst (110; 120) für ein erstes Volumen aus dem zusätzlichen oberstromigen Volumen (Vol$_{PI}$) und dem Volumen des Kerns (Vol$_C$), dann (120; 110) für ein zweites Volumen aus dem zusätzlichen oberstromigen Volumen (Vol$_{PI}$) und dem Volumen des Kerns (Vol$_C$), wobei der Initialwert der Geschwindigkeit (V) oder des Drucks (P) in der ersten Grenzfläche für den dem zweiten Volumen zugeordneten Berechnungsschritt die entsprechende Größe aus Geschwindigkeit (V) und Druck (P) ist, die zuvor in der ersten Grenzfläche mit dem dem ersten Volumen zugeordneten Berechnungsschritt berechnet wurde, und
b) in der zweiten Grenzfläche zunächst (130; 140) für ein drittes Volumen aus dem zusätzlichen unterstromigen Volumen (Vol$_{PS}$) und dem Volumen des Kerns (Vol$_C$), dann (140; 130) für ein viertes Volumen aus dem zusätzlichen unterstromigen Volumen (Vol$_{PS}$) und dem Volumen des Kerns (Vol$_C$), wobei der Initialwert der Geschwindigkeit (V) oder des Drucks (P) in der zweiten Grenzfläche für den dem vierten Volumen zugeordneten Berechnungsschritt die entsprechende Größe aus Geschwindigkeit (V) und Druck (P) ist, die zuvor in der zweiten Grenzfläche mit dem dem dritten Volumen zugeordneten Berechnungsschritt berechnet wurde.

**12.** Rechnerprogrammprodukt, umfassend Softwareinstruktionen, das, wenn sie von einem Rechner umgesetzt werden, das Verfahren nach einem der vorangehenden Ansprüche umsetzt.

**13.** Verfahren zur Berechnung einer mechanischen Verformung mindestens eines Bündels (40) eines Kerns (12) eines Kernreaktors (10), wobei der Kernreaktor (10) einen Behälter (11) umfasst und der Kern (12) im Innern des Behälters (11) angeordnet ist, wobei die mechanische Verformung des oder jedes Bündels (40) von der Strömung eines Mediums im Innern des Behälters (11) abhängt,
wobei das Verfahren **dadurch gekennzeichnet ist, dass** die Strömung des Mediums mit einem Simulationsverfahren nach einem der Ansprüche 1 bis 11 simuliert wird.

**14.** Rechnerprogrammprodukt, umfassend Softwareinstruktionen, das, wenn sie von einem Rechner umgesetzt werden, das Verfahren nach Anspruch 13 umsetzt.

**Claims**

**1.** A method for simulating the flow of a fluid inside a vessel (11) of a nuclear reactor (10) using a computer suitably programmed, the nuclear reactor (10) comprising the vessel (11) and a core (12) positioned inside said vessel (11), the core (12) including nuclear fuel assemblies (40), each assembly (40) extending in an axial direction (Z) and including nuclear fuel rods (46) and at least one grid (56) for maintaining the rods, each assembly (40) being spaced apart from another assembly (40) by a clearance (BP1) between the grids (56) in a transverse direction (X, Y) perpendicular to the axial direction (Z), the fluid being able to flow inside the core (12),
the method comprising the following steps:

- i) determining (200, 210, 220, 230) head loss coefficients in the core (12),
- ii) computing (240) the pressure (P) of the fluid and the component(s) of the speed (V) of the fluid in the core, using the following equation:

$$\nabla P = -K \times V$$

where $\nabla$ is the order one spatial derivation nabla operator,
P is the component of the pressure of the fluid,
K is a matrix including the head loss coefficients determined during step i), and
V is a vector including the component(s) of the speed of the fluid,

in which method, during step i), a transverse head loss coefficient in the assemblies (40) is determined as a function of a transverse Reynolds number (Re) in the transverse direction (X, Y), and an axial head loss coefficient in the clearance (BP1) is determined as a function of the dimension of the clearance (BP1) in the transverse direction (X, Y).

2. The method according to claim 1, wherein, during step i), the transverse head loss coefficient is determined, for a value of the transverse Reynolds number (Re), by comparison with a variable, such as a hydraulic force in the transverse direction (X, Y), computed for part of the assembly (40) using a first model, with said variable computed for said part of the assembly (40) using a second model, separate from the first model.

3. The method according to claim 2, wherein the relationship of the transverse head loss coefficient as a function of the transverse Reynolds number (Re) is computed by interpolation of several values of the transverse head loss coefficient determined for a plurality of comparisons performed.

4. The method according to claim 2 or 3, wherein at least one grid among the grids (56) further comprises additional mixing means able to generate a flow having at least one transverse speed in the transverse direction (X, Y), and at least one second grid among the grids (56) does not include additional mixing means, and wherein a first relationship of the transverse head loss coefficient as a function of the transverse Reynolds number (Re) is computed for a first part of the assembly (40) including the first grid, and a second relationship of the transverse head loss coefficient as a function of the transverse Reynolds number (Re) is computed for a second part of the assembly (40) including the second grid.

5. The method according to any one of the preceding claims, wherein, during step i), the axial head loss coefficient in the clearance (BP1) is determined, for a value of the dimension of the clearance (BP1), by comparison with a variable, such as a hydraulic force in the transverse direction, computed for part of the assembly (40) using a first model, with said variable computed for said part of the assembly (40) using a second model, different from the first model.

6. The method according to claim 5, wherein the relationship of the axial head loss coefficient in the clearance (BP1) as a function of said dimension of the clearance (BP1) is computed by interpolation of several values of the axial head loss coefficient in the clearance (BP1) between the grids (56), determined for a plurality of comparisons performed.

7. The method according to any one of the preceding claims, wherein during step i), the head loss coefficients other than the transverse head loss coefficient in the assemblies (40) and the axial head loss coefficient in the clearance (BP1) between the grids (56) each have a predetermined value, preferably a predetermined constant value.

8. A simulation method using a method according to any one of the preceding claims, wherein the vessel (11) includes a fluid inlet orifice (39A) and a fluid outlet orifice (39B), the core (12) includes a lower plate (41A) and an upper plate (41 B), the assemblies (40) extending between the lower (41A) and upper (41 B) plates, the core (12) having a volume (Vol$_C$) delimited by first and second interfaces in the axial direction (Z), the first and second interfaces respectively corresponding to the lower and upper plates (41 A, 41 B), and wherein the method further comprises the following steps:

  - determining (100) at least one additional volume (Vol$_{PI}$, Vol$_{PS}$) inside the vessel (11), the additional volume (Vol$_{PI}$, Vol$_{PS}$) being outside the core volume (Vol$_C$) and situated at one end thereof in the axial direction (Z), the additional volume (Vol$_{PI}$, Vol$_{PS}$) being delimited by two interfaces in the axial direction (Z), one of the two interfaces of the additional volume (Vol$_{PI}$, Vol$_{PS}$) being the first interface or the second interface,

and according to any one of the preceding claims:

  - computing (110, 140), for the additional volume (Vol$_{PI}$, Vol$_{PS}$) and using the mass balance, movement quantity balance and energy balance equations of the fluid, the pressure (P) of the fluid and the component(s) of the speed (V) of the fluid, from an initial value of the speed (V) or pressure (P) in one of the interfaces of the additional volume (Vol$_{PI}$, Vol$_{PS}$) and an initial value of the speed (V) or the pressure (P) in the other of the interfaces of the additional volume (Vol$_{PI}$, Vol$_{PS}$),
- computing (120, 130), for the core volume (Vol$_C$), the pressure (P) of the fluid and the component(s) of the speed (V) of the fluid, from an initial value of the speed (V) or pressure (P) of the fluid in the first interface and an initial value of the speed (V) or pressure (P) of the fluid in the second interface and according to step ii), and

the computation of the pressure (P) of the fluid and of the component(s) of the speed (V) of the fluid is first done for a first volume among the additional volume (Vol$_{PI}$, Vol$_{PS}$) and the core volume (Vol$_C$), and in particular in the interface among the first and second interfaces that is shared by the additional volume (Vol$_{PI}$, Vol$_{PS}$) and the core volume (Vol$_C$), then the pressure (P) of the fluid and of the component(s) of the speed (V) of the fluid is computed for the second volume among the additional volume (Vol$_{PI}$, Vol$_{PS}$) and the core volume (Vol$_C$), the initial value of the speed (V) or pressure (P) at the interface shared by the additional volume (Vol$_{PI}$, Vol$_{PS}$) and the core volume (Vol$_C$) and for that computation step associated with the second volume then being the value of the corresponding variable among the speed (V) and the pressure (P) previously computed at said interface for the first volume.

9. The method according to claim 8, wherein the mass balance, movement quantity balance and energy balance equations are respectively as follows:

$$\frac{\partial \rho}{\partial t} + \nabla(\rho V) = S_m$$

$$\frac{\partial(\rho V)}{\partial t} + \nabla \cdot (\rho V \otimes V) = -\nabla P + \nabla \cdot \tau + \rho F + S_i$$

$$\frac{\partial(\rho E)}{\partial t} + \nabla \cdot \left[(\rho E + P) \times V\right] = \nabla \cdot (\tau \cdot V) + \rho F \cdot V - \nabla \cdot Q + R + S_e$$

where $\nabla$ is the order one spatial derivation nabla operator, $P$ is the component of the pressure of the fluid, $V$ is a vector including the component(s) of the speed of the fluid, $p$ is the density of the fluid, $t$ is the time, $\tau$ is the tensor of the viscous stresses, $F$ is a vector including the component(s) of the resultant of the mass forces exerted in the fluid, $E$ is a total energy per unit of mass, $Q$ is a vector including the component(s) of the heat lost by thermal conduction, $R$ is the volume heat loss due to radiation, $S_m$ is the mass source, $S_i$ is the movement quantity source, and $S_e$ is the energy source.

10. The method according to claim 8 or 9, wherein:

- the computation step for the first volume is reiterated with, as initial value of the speed (V) or the pressure (P) at that shared interface and for that reiteration of the computation step associated with the first volume, the value of the corresponding variable among the speed (V) and pressure (P) computed during a step carried out previously in that interface for the second volume, and
- the computation step for the second volume is reiterated with, as initial value of the speed (V) or the pressure (P) at that shared interface and for that reiteration of the computation step associated with the second volume, the value of the corresponding variable among the speed (V) and pressure (P) computed previously in that interface for the first volume during the reiteration.

11. The method according to any one of claims 8 to 10, wherein two additional volumes (Vol$_{PI}$, Vol$_{PS}$) are determined during the determining step (100): an additional upstream volume (Vol$_{PI}$) situated upstream from the core volume (Vol$_C$) in the flow direction of the fluid and a downstream additional volume (Vol$_{PS}$) situated downstream from the core volume (Vol$_C$) in the flow direction of the fluid, the first interface of the core volume (Vol$_C$) being shared with the additional upstream volume (Vol$_{PI}$) and the second interface of the core volume (Vol$_C$) being shared with the additional downstream volume (Vol$_{PS}$), and wherein the computation of the pressure (P) of the fluid and the component(s) of the speed (V) of the fluid is done:

a) in the first interface, first (110; 120) for a first volume among the upstream additional volume (Vol$_{PI}$) and the core volume (Vol$_C$), then (120 ; 110) for a second volume among the additional upstream volume (Vol$_{PI}$) and the core volume ($Vol_C$), the initial value of the speed (V) or the pressure (P) in the first interface for the computation step associated with the second volume being the corresponding variable among the speed (V) and pressure (P) previously computed in the first interface during the computation step associated with first volume, and

b) in the second interface, first (130; 140) for a third volume among the additional downstream volume ($Vol_{PS}$) and the core volume ($Vol_C$), then (140; 130) for a fourth volume among the additional downstream volume ($Vol_{PS}$) and the core volume ($Vol_C$), the initial value of the speed (V) or the pressure (P) in the second interface for the computation step associated with the fourth volume being the corresponding variable among the speed (V) and the pressure (P) previously computed in the second interface during the computation step associated with the third volume.

12. A computer program product including software instructions which, when executed by a computer, implement the simulation method according to any one of the preceding claims.

13. A method for calculating a mechanical deformation of at least one assembly (40) of a core (12) of a nuclear reactor (10), the nuclear reactor (10) comprising a vessel (11) and the core (12) positioned inside the vessel (11), the mechanical deformation of each assembly (40) depending on the flow of a fluid inside the vessel (11),
the method being **characterized in that** the flow of the fluid is simulated with a simulation method according to any one of claims 1 to 11.

14. A computer program product including software instructions which, when executed by a computer, implement a method according to claim 13.

## FIG.1

FIG.2

FIG.3

FIG.4

FIG.5

| | Détermination du volume du coeur et des volumes additionnels |
|---|---|

| | Calcul de P,V en la 1ère interface pour le premier volume additionnel |
|---|---|

| | Calcul de P,V en la 1ère interface pour le volume du coeur |
|---|---|

| | Calcul de P,V en la 2nde interface pour le volume du coeur |
|---|---|

| | Calcul de P,V en la 2nde interface pour le second volume additionnel |
|---|---|

FIG.6

FIG.7 (ART ANTERIEUR)

FIG.8

200 — Déterminer plusieurs valeurs du coefficient
de perte de charge transverse pour plusieurs valeurs de Re,
à l'aide de deux modèles distincts

210 — Calculer la relation du coefficient de perte de charge
transverse en fonction de Re par interpolation
des valeurs déterminées précédemment

220 — Déterminer plusieurs valeurs du coefficient de perte
de charge axiale dans le jeu entre les grilles
pour plusieurs valeurs de la dimension du jeu entre les grilles,
à l'aide de deux modèles distincts

230 — Calculer la relation du coefficient de perte
de charge axiale dans le jeu entre les grilles
en fonction de la dimension du jeu entre les grilles par
interpolation des valeurs déterminées précédemment

240 — Calculer P,V pour le volume du coeur suivant $\nabla P = -K.V$
et à l'aide des coefficients de perte de charge transverse
et axiale calculés précédemment

## FIG.9

FIG.10

FIG.11

FIG.12

FIG.13

FIG.14

FIG.15

**EP 2 984 656 B1**

## RÉFÉRENCES CITÉES DANS LA DESCRIPTION

**Documents brevets cités dans la description**

- KR 100957066 B1

- KR 100957061 B1